# EUROPEAN PATENT SPECIFICATION

(11) **EP 4 543 072 B1**
(45) Date of publication and mention of the grant of the patent: **09.09.2026**
(21) Application number: 23838818.5
(22) Date of filing: 05.07.2023
(51) Int. Cl.: G06N 20/00, H04W 24/10

(54) **COMMUNICATION METHOD, APPARATUS AND SYSTEM**
KOMMUNIKATIONSVERFAHREN, -VORRICHTUNG UND -SYSTEM
PROCÉDÉ, APPAREIL ET SYSTÈME DE COMMUNICATION

(30) Priority: 12.07.2022 CN 202210820351; 15.08.2022 CN 202210977688
(43) Date of publication of application: 23.04.2025
(73) Proprietor: Huawei Technologies Co., Ltd., Shenzhen, Guangdong 518129 (CN)
(72) Inventor: WANG, Sihai, Shenzhen, Guangdong 518129 (CN); QIN, Cheng, Shenzhen, Guangdong 518129 (CN); YANG, Rui, Shenzhen, Guangdong 518129 (CN)
(74) Representative: Gill Jennings & Every LLP
(86) International application number: PCT/CN2023/105896
(87) International publication number: WO 2024/012326

(56) References cited:
- WO-A1-2022/015221
- WO-A1-2022/015221
- CN-A- 112 580 826
- CN-A- 112 580 826
- CN-A- 114 548 416
- CN-A- 114 548 416
- HUAWEI ET AL: "Discussion on general aspects of AI/ML framework", vol. RAN WG1, no. e-Meeting; 20220509 - 20220520, 29 April 2022 (2022-04-29), XP052143957, Retrieved from the Internet <URL:https://www.3gpp.org/dynareport?code=TDocExMtg--R1-109-e--60236.htm> [retrieved on 20220429]
- HUAWEI, HISILICON: "Discussion on general aspects of AI/ML framework", 3GPP DRAFT; R1-2203139, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20220509 - 20220520, 29 April 2022 (2022-04-29), Mobile Competence Centre ; 650, route des Lucioles ; F-06921 Sophia-Antipolis Cedex ; France, XP052143957

## Description

### CROSS-REFERENCE TO RELATED APPLICATIONS

This application claims priority to Chinese Patent Application No. 202210820351.1, filed with the China National Intellectual Property Administration on July 12, 2022 and entitled "DATA FEATURE DISTRIBUTION PROCESSING METHOD AND APPARATUS"; and this application claims priority to Chinese Patent Application No. 202210977688.3, filed with the China National Intellectual Property Administration on August 15, 2022 and entitled "COMMUNICATION METHOD, APPARATUS, AND SYSTEM".

### TECHNICAL FIELD

This application relates to the field of communication technologies, and in particular, to a communication method, apparatus, and system.

### BACKGROUND

In a wireless communication system, some measurement information, status information, and the like are usually communicated between two devices, to implement subsequent signal transmission. This can improve performance of the communication system. For example, the two devices are a network device and a terminal device respectively. The terminal device may encode to-be-communicated information (for example, the measurement information and the status information) by using an artificial intelligence (artificial intelligence, AI) model (for example, an AI encoder), and feed back encoded information to the network device. The network device obtains, through decoding by using an AI decoder corresponding to the AI encoder, information (for example, the measurement information and the status information) reported by the terminal device.

An AI model used by the terminal device in a specific region is generated through training by a server associated with the terminal device, and training data of the AI model includes data collected in the specific region by a plurality of terminal devices associated with the server.

CN112580826A discloses a service model training method, device and system through first member equipment and at least two pieces of second member equipment. Each second member equipment has a local business model and local sample data, and the local sample data is non-independent identically distributed data. Each second member equipment provides the local sample data distribution information to the first member equipment. The first member equipment determines overall sample data probability distribution according to the local sample data distribution information of each second member equipment, and sends the overall sample data probability distribution to each second member equipment. Each piece of second member equipment determines extended sample data of each type of sample data from the local sample data according to the overall sample data probability distribution and the hyper-parameters, and the extended sample data is used for extending training sample data of the business model.

WO2022015221A1 discloses methods for managing a wireless device that is operable to connect to a communication network comprising a Radio Access Network (RAN). One method, performed by a node of the communication network, comprises: selecting, on the basis at least of information about one or more of a behaviour of the wireless device and a radio environment experienced by the wireless device, a machine-learning (ML) model from a plurality of candidate ML models to be downloaded to the wireless device, the candidate models providing outputs on the basis of which respective RAN operations performed by the wireless device are configured; and causing transmission of the selected ML model to the wireless device for execution by the wireless device.

### SUMMARY

However, in addition to a plurality of terminal devices associated with a server, in a specific region, another terminal device associated with another server is further included. In other words, training data of an AI model is data collected by a part of terminal devices in the specific region. Therefore, feature distribution of the training data of the AI model may be different from feature distribution of total training data in the specific region, and consequently performance of the AI model is affected. For example, to-be-communicated information may be distorted after AI encoding and AI decoding are performed.

This application provides a communication method, apparatus, and system, to resolve a problem that the performance of the AI model is affected because the feature distribution of the training data of the AI model is different from the feature distribution of the total training data in the specific region.

The invention is set forth in the independent claims and further embodiments are defined in the dependent claims.

According to a first aspect, an embodiment of this application provides a communication system as set out in appended claim 1.

In the foregoing system, the network device sends the first feature distribution information to the first terminal device, and the first terminal device sends the first feature distribution information to the first server associated with the first terminal device. In this way, although first training data used by the first server to generate the AI model is data collected in the first region by the terminal device associated with the first server, and feature distribution of the first training data may be different from feature distribution of total training data in the first region, the first server may obtain the first feature distribution information (indicating the feature distribution of the total training data in the first region). Therefore, the first server may use the first feature distribution information as auxiliary information for generating the AI model, so that the AI model generated based on the first training data is close to an AI model generated based on the total training data in the first region, effectively improving performance of the AI model.

In a possible design, the first terminal device is configured to send first information to the network device. The first information includes at least one of the following: feature information of P1 groups of data and feature distribution information of the P1 groups of data. The P1 groups of data are data that is collected in the first time period by the first terminal device located in the first region, and P1 is a positive integer. The terminal device includes the first terminal device. The network device is further configured to determine the first feature distribution information based on the first information.

In a possible design, the network device is further configured to send first request information. The first request information is used to request the terminal device to collect data in the first time period and report feature information and/or feature distribution information of the collected data. Before sending the first information to the network device, the first terminal device is further configured to receive the first request information.

In a possible design, the first request information includes at least one of the following: first indication information, where the first indication information indicates that information the terminal device is requested to report is the feature information and/or the feature distribution information of the data collected by the terminal device; second indication information, where the second indication information indicates a first manner and/or a second manner, the first manner is used to determine the feature information of the data collected by the terminal device, and the second manner is used to determine the feature distribution information of the data collected by the terminal device; terminal configuration information, where the terminal configuration information indicates a configuration condition that should be met when the first terminal device collects the P1 groups of data; trigger information, where the trigger information includes a trigger manner and/or a trigger configuration, the trigger manner includes at least one of the following: event triggering and periodic triggering, and the trigger configuration includes at least one of the following: a trigger event and a trigger periodicity; quantity information, where the quantity information indicates a value of P1; region information, where the region information indicates the first region; and time period information, where the time period information indicates the first time period. In this way, the first terminal device may report the first information to the network device based on a request of the network device, so that the network device can flexibly control the terminal device.

In a possible design, the first terminal device is further configured to send second request information to the network device. The second request information is used to request to send the first feature distribution information to the first terminal device. Before sending the first feature distribution information to the first terminal device, the network device is further configured to receive the second request information.

In a possible design, the first server is further configured to send third request information to the first terminal device. The third request information is used to request to send the first feature distribution information to the first server. Before sending the first feature distribution information to the first server, the first terminal device is further configured to receive the third request information.

In the first aspect, before generating the AI model based on the first feature distribution information and the training data, the first server is configured to determine that a difference between the first feature distribution information and second feature distribution information meets a first condition. The second feature distribution information is pre-obtained by the first server. In this way, the first server determines, based on the first feature distribution information and the second feature distribution information, whether the AI model needs to be updated, so that the first server can conveniently and quickly identify whether the AI model needs to be updated, to update the AI model more properly, and avoid heavy processing load of the first server caused by frequent AI model updates or poor performance of the AI model caused by the AI model that is not updated for a long time.

In a possible design, the first server is further configured to receive the P1 groups of data from the first terminal device. The training data includes the P1 groups of data, the P1 groups of data are the data that is collected in the first time period by the first terminal device located in the first region, and P1 is a positive integer.

In a possible design, the first server is further configured to receive P2 groups of data from the second terminal device. The training data includes the P2 groups of data, the P2 groups of data are data that is collected in the first time period by the second terminal device located in the first region, and P2 is a positive integer.

In a possible design, the training data includes data pre-obtained by the first server.

According to a second aspect, an embodiment of this application provides a communication method as set out in appended claim 8.

In a possible design, the method further includes: receiving P1 groups of data from the first terminal device. The P1 groups of data are data that is collected in the first time period by the first terminal device located in the first region, and P1 is a positive integer. Training data includes the P1 groups of data.

In a possible design, the method further includes: receiving P2 groups of data from the second terminal device. The P2 groups of data are data that is collected in the first time period by the second terminal device located in the first region, and P2 is a positive integer. The training data includes the P2 groups of data.

In a possible design, the training data includes data pre-obtained by the first server.

In the second aspect, before the generating an AI model based on the first feature distribution information, the method further includes: determining that a difference between the first feature distribution information and second feature distribution information meets a first condition. The second feature distribution information is pre-obtained by the first server.

In a possible design, before the receiving first feature distribution information from a first terminal device, the method further includes: sending third request information to the first terminal device. The third request information is used to request to send the first feature distribution information to the first server.

According to a third aspect, this application provides a communication apparatus as set out in appended claim 13. The communication apparatus has functions for implementing the second aspect. For example, the communication apparatus includes modules, units, or means corresponding to performing operations in the second aspect. The modules, units, or means may be implemented by using software, or may be implemented by using hardware, or may be implemented by hardware by executing corresponding software.

In a possible design, the communication apparatus includes a processor, and the processor may be coupled to a memory. The memory may store a computer program or instructions necessary for implementing the functions in the second aspect. The processor may execute the computer program or the instructions stored in the memory. When the computer program or the instructions are executed, the communication apparatus is enabled to implement the method according to any possible design or implementation of the second aspect.

In a possible design, the communication apparatus includes a processor and an interface circuit. The processor communicates with another apparatus through the interface circuit, and performs the method according to any possible design or implementation of the second aspect.

It may be understood that in the third aspect, the processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and there may be one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, this application provides a computer-readable storage medium as set out in appended claim 14. The computer-readable storage medium stores computer-readable instructions. When a computer reads and executes the computer-readable instructions, the computer is enabled to perform the method according to any possible design of the second aspect.

According to a fifth aspect, this application provides a computer program product as set out in appended claim 15. When a computer reads and executes the computer program product, the computer is enabled to perform the method according to any possible design of the second aspect.

### BRIEF DESCRIPTION OF DRAWINGS

FIG. 1 is a diagram of a communication system to which an embodiment of this application is applicable;
FIG. 2 is a diagram of histogram statistics collection according to an embodiment of this application;
FIG. 3 is a diagram of terminal devices of different vendors included in a region 1 according to an embodiment of this application;
FIG. 4 is a diagram of different feature distribution according to an embodiment of this application;
FIG. 5 is a schematic flowchart corresponding to a communication method according to Embodiment 1 of this application;
FIG. 6 is a schematic flowchart corresponding to a communication method according to Embodiment 2 of this application;
FIG. 7 is a schematic flowchart corresponding to a communication method according to Embodiment 3 of this application;
FIG. 8 is a schematic flowchart corresponding to a communication method according to Embodiment 4 of this application;
FIG. 9 is a possible block diagram of an example of an apparatus according to an embodiment of this application;
FIG. 10 is a diagram of a structure of a terminal device according to an embodiment of this application;
FIG. 11 is a diagram of a structure of a network device according to an embodiment of this application; and
FIG. 12 is a diagram of a structure of a server according to an embodiment of this application.

### DESCRIPTION OF EMBODIMENTS

The following describes technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a worldwide interoperability for microwave access (worldwide interoperability for microwave access, WiMAX) communication system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner. In embodiments of this application, "of", "corresponding (corresponding, relevant)", and "corresponding (corresponding)" may be interchangeably used sometimes. It should be noted that meanings expressed by the terms are consistent when differences are not emphasized.

A network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

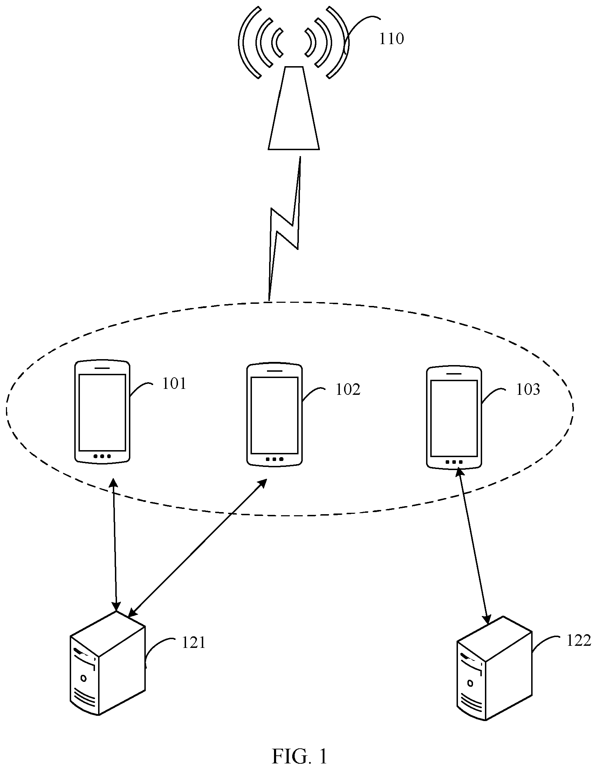

For ease of understanding embodiments of this application, a communication system shown in FIG. 1 is first used as an example to describe in detail a communication system applicable to embodiments of this application. As shown in FIG. 1, the communication system includes a plurality of terminal devices (for example, a terminal device 101, a terminal device 102, and a terminal device 103) and one or more network devices (for example, a network device 110), and optionally, may further include one or more servers (for example, a server 121 and a server 122).

### (1) Terminal device

The terminal device is a terminal that accesses the foregoing communication system and that has a wireless transceiver function, or a chip or a chip system that may be disposed in the terminal. The terminal device may also be referred to as user equipment (user equipment, UE), a user apparatus, an access terminal, a subscriber unit, a subscriber station, a mobile station (mobile station, MS), a remote station, a remote terminal, a mobile device, a user terminal, a terminal, a terminal unit, a terminal station, a terminal apparatus, a wireless communication device, a user agent, or a user apparatus.

For example, the terminal device in embodiments of this application may be a mobile phone (mobile phone), a wireless data card, a personal digital assistant (personal digital assistant, PDA) computer, a laptop computer (laptop computer), a tablet computer (Tablet, for example Pad), an uncrewed aerial vehicle, a computer with a wireless transceiver function, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game machine, a smart television, a smart speaker, a smart refrigerator, or fitness equipment) in a smart home (smart home), a vehicle-mounted terminal, or an RSU having a terminal function. The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device (handset) with a wireless communication function, a computing device or another processing device connected to a wireless modem, a wearable device, or the like.

For another example, the terminal device in embodiments of this application may be an express delivery terminal (for example, a device that can monitor a location of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal device in this application may be a vehicle-mounted module, a vehicle-mounted module, a vehicle-mounted component, a vehicle-mounted chip, or a vehicle-mounted unit that is built in a vehicle as one or more components or units. The vehicle may implement a method provided in this application through the vehicle-mounted module, the vehicle-mounted module, the vehicle-mounted component, the vehicle-mounted chip, or the vehicle-mounted unit that is built in the vehicle.

### (2) Network device

The network device may be one of an access network device and a core network element, or the network device may be a device integrating one or more devices in a core network element and an access network device.

The access network device is a device that is located on a network side of the communication system and that has a wireless transceiver function, or a chip or a chip system that may be disposed in the device. The access network device includes but is not limited to an access point (access point, AP) in a wireless fidelity (wireless fidelity, Wi-Fi) system, for example, a home gateway, a router, a server, a switch, or a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission reception point, TRP, or transmission point, TP), or the like. The access network device may alternatively be a gNB or a transmission point (TRP or TP) in a 5G system, for example, a new radio (new radio, NR) system, or one antenna panel or a group of antenna panels (including a plurality of antenna panels) of a base station in the 5G system. The access network device may alternatively be a network node constituting a gNB or a transmission point, for example, a baseband unit (BBU), a distributed unit (distributed unit, DU), or a road side unit (road side unit, RSU) having a base station function. The access network device may alternatively be a satellite, or base stations in various forms in the future.

The core network element may include but is not limited to one or more of the following: a user plane network element, a mobility management network element, a session management network element, a policy control network element, and a storage function network element.

The user plane network element serves as an interface to a data network, and implements functions such as user plane data forwarding, session/flow-level based charging statistics collection, and bandwidth throttling, that is, packet routing and forwarding, handling of quality of service (quality of service, QoS) of user plane data, and the like. In the 5G communication system, the user plane network element may be a user plane function (user plane function, UPF) network element.

The mobility management network element is mainly configured to perform mobility management, access management, and the like. In the 5G communication system, the access management network element may be an access and mobility management function (access and mobility management function, AMF) network element, and mainly performs functions such as mobility management and access authentication/authorization. In addition, the mobility management network element is further responsible for transferring a user policy between the terminal and a policy control function (policy control function, PCF) network element.

The session management network element is mainly used for session management (for example, establishment or deletion), maintenance of a session context and user plane forwarding tunnel information, user equipment internet protocol (internet protocol, IP) address allocation and management, selection of termination points of manageable user plane functions, policy control and charging function interfaces, downlink data notification, and the like. In the 5G communication system, the session management network element may be a session management function (session management function, SMF) network element, and implements terminal IP address allocation, UPF selection, charging, QoS policy control, and the like.

The policy control network element includes a user subscription data management function, a policy control function, a charging policy control function, quality of service (quality of service, QoS) control, and the like, is a unified policy framework used to guide network behavior, and provides policy rule information and the like for a control plane function network element (for example, an AMF or an SMF network element). In the 5G communication system, the policy control network element may be a PCF.

The storage function network element provides a storage function and a selection function of network functional entity information for another core network element. In the 5G communication system, the network element may be a network function repository function (network function repository function, NRF) network element.

### (3) Server

The server may also be referred to as an over the top (over the top, OTT) server of a network. The server may be associated with a plurality of terminal devices. When the terminal device is associated with the server, the terminal device may communicate with the server. As shown in FIG. 1, a terminal device 101 and a terminal device 102 are associated with a server 121, and a terminal device 103 is associated with a server 122. The terminal device 101 is used as an example. The terminal device 101 may communicate with the server 121. For example, the terminal device 101 may send, to the server 121, data collected by the terminal device 101. The data collected by the terminal device 101 may be used by the server 121 to generate an AI model, and the server 121 may send configuration information of the AI model to the terminal device 101, so that the terminal device 101 may use the AI model based on the configuration information of the AI model.

The server may be associated with the terminal device in a plurality of scenarios. In a possible scenario, the communication system shown in FIG. 1 may include a plurality of terminal devices. The plurality of terminal devices may belong to different terminal device vendors, or chips used by the plurality of terminal devices may belong to different chip vendors. One or more terminal device vendors may form a group (or an interest group), or one or more chip vendors may form a group, or one or more terminal device vendors and one or more chip vendors may form a group. One group may maintain one server or one server cluster (one server cluster may include a plurality of servers). In embodiments of this application, an example in which "one group maintains one server" is used for description. A server maintained by a group is associated with a terminal device of the group.

For example, both the terminal device 101 and the terminal device 102 belong to a terminal device vendor 1, and the server 121 is a server maintained by the terminal device vendor 1. Therefore, the terminal device 101 and the terminal device 102 are associated with the server 121. The terminal device 103 belongs to a terminal device vendor 2, and the server 122 is a server maintained by the terminal device vendor 2. Therefore, the terminal device 103 is associated with the server 122.

It may be understood that the communication method provided in embodiments of this application is applicable between the server, the terminal device, and the network device shown in FIG. 1, or is applicable between the terminal device and the network device. For specific implementation, refer to the following method embodiments. The technical solutions in embodiments of this application may be further applied to another communication system, and a corresponding name may alternatively be replaced with a name of a corresponding function in the another communication system. FIG. 1 is only a simplified diagram of an example for ease of understanding. The communication system may further include at least one of another network device, another terminal device, or another server, which is not shown in FIG. 1.

The following first explains related content in embodiments of this application. It should be noted that these explanations are intended to facilitate understanding of embodiments of this application, but should not be considered as a limitation on the protection scope claimed in this application.

### (1) Feature information of a group of data

In embodiments of this application, a group of data may also be referred to as one piece of data. An example in which "a group of data is first data" is used herein for description. For example, the first data may be determined based on downlink channel state information of the terminal device, or the first data may be data related to positioning of the terminal device. The first data is not limited in embodiments of this application. In correspondence to different application scenarios, the first data may be different.

Feature information of the first data indicates a feature of the first data. Optionally, the feature of the first data may be obtained by processing the first data in a first manner.

The first manner may include a first processing process. For example, the first processing process may include histogram (histogram) statistics collection. Optionally, the first manner may further include a second processing process and/or a third processing process. The second processing process is a processing process before the first processing process, and the third processing process is a processing process after the first processing process.

In other words, the feature of the first data may be obtained based on the first processing process, the feature of the first data may be obtained based on the second processing process and the first processing process, the feature of the first data may be obtained based on the first processing process and the third processing process, or the feature of the first data may be obtained based on the first processing process, the second processing process, and the third processing process.

### (1.1) First processing process

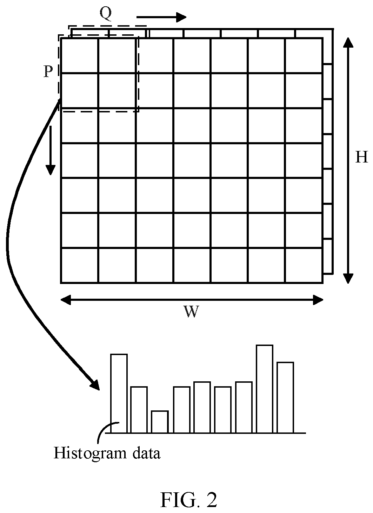

As described above, the first processing process may include histogram statistics collection. FIG. 2 is a diagram of histogram statistics collection according to an embodiment of this application. With reference to FIG. 2, it is assumed that first data is three-dimensional data, for example, a dimension is W×H×D, W and H may be information related to the first data, D may be 2, and D represents a real part and an imaginary part. The first data is traversed by using a cell P×Q×T as a unit, where 1≤P≤W, 1≤Q≤H, 1≤T≤D, and there may be or may not be overlapping in a traversal process. Histogram statistics collection is performed for each cell P×Q×T, histogram data may be obtained, and all obtained histogram data forms a feature (a matrix or a vector) of the first data. The histogram data may be based on a value of each element in the cell P×Q×T, or may be based on a direction and a strength of each element in the cell P×Q×T. It may be understood that the dimension of the first data is not limited in this application, and FIG. 2 is merely an example provided in this application.

In an example, the first data is determined based on the downlink channel state information. For example, the first data includes the downlink channel state information. The downlink channel state information may be represented by using a first dimension, a second dimension, and a third dimension. Optionally, the first dimension corresponds to a quantity of carriers or a quantity of sub-bands, the second dimension corresponds to a quantity of antenna ports or a quantity of radio frequency chains of a network device, and the third dimension represents the real part and the imaginary part. Assuming that the first dimension is W, the second dimension is H, and the third dimension is D, the downlink channel state information may be W×H×D. With reference to FIG. 2, the downlink channel state information is traversed by using the cell P×Q×T as a unit, and histogram statistics collection is performed for each cell P×Q×T to obtain histogram data, and all obtained histogram data forms a feature (a matrix or a vector) of the downlink channel state information.

It may be understood that, in another possible implementation, the first processing process may include radio channel feature extraction. A radio channel feature may include but is not limited to one or more of the following features: a power delay profile (power delay profile, PDP), a time-varying Doppler spectrum, an angular power spectrum (angular power spectrum, APS), PDP sparseness, Doppler spectrum sparseness, and APS sparseness.

### (1.2) Second processing process

Optionally, the second processing process may include but is not limited to one or more of the following: Fourier transform, fast Fourier transform (fast Fourier transform, FFT), discrete Fourier transform (discrete Fourier transform, DFT), data truncation, coordinate conversion, amplitude keeping, noise reduction, normalization, graying, data correction (for example, Gamma correction), quantization, singular value decomposition (singular value decomposition, SVD), translation, data augmentation, gradient calculation, feature template filtering, partial selection, and combining of a plurality of processing results.

Gradient calculation may include a binarization gradient in a local binary pattern algorithm. Feature template filtering may include performing a Sobel operator (Sobel operator) operation on data (for example, a feature), obtaining a Haar-like feature (Haar-like feature) through calculation, obtaining an edge in the data by using a canny edge detection algorithm, and/or the like. Partial selection may include extracting a region of interest (region of interest, ROI) by using a method like scale-invariant feature transform. Combining of a plurality of processing results may include combining data obtained through calculation by a plurality of different Sobel operators.

It should be noted that, when the second processing process includes a plurality of items, an execution sequence of Fourier transform, FFT, DFT, data truncation, coordinate conversion, amplitude keeping, noise reduction, normalization, graying, data correction (for example, gamma correction), quantization, SVD, translation, data augmentation, gradient calculation, feature template filtering, partial selection, and combining of a plurality of processing result is not limited in this application.

### (1.3) Third processing process

Optionally, the third processing process may include but is not limited to one or more of the following: normalization, feature combination, dimension reduction, quantization, and encoding.

Histogram data based on a single cell or a plurality of cells may be obtained through normalization. Feature combination may include combination of histogram features obtained through a plurality of scales (for example, performing preprocessing interpolation or dimension reduction to generate a plurality of images of different scales, and then extracting features separately) or different configurations (for example, cells of different sizes). Dimension reduction may include but is not limited to one or more of the following: performing grouping and summing up on the histogram data (data obtained through histogram statistics collection), and compressing a dimension of the histogram data by using a feature dimension reduction method.

Optionally, fewer feature dimensions may be obtained by performing grouping and summing up on the histogram data. For example, performing grouping and summing up on the histogram data may include: summing up rows and columns of a matrix of the histogram data respectively in a deformable part model algorithm. Optionally, the feature dimension reduction method may include but is not limited to: principal component analysis (principal component analysis, PCA) and linear discriminant analysis (linear discriminant analysis, LDA).

### (1.4) Specific example of the first manner

Based on the descriptions of the first processing process, the second processing process, and the third processing process, in an example, the first manner may be any one of the following: a histogram of oriented gradient (histogram of oriented gradient, HOG), a local binary pattern (local binary pattern, LBP), an edge orientation histogram (edge orientation histogram, EOH), an edge histogram descriptor (edge histogram descriptor, EHD), an edge direction histogram (edge direction histogram, EDH), a deformable part model (deformable part model, DPM), scale-invariant feature transform (scale-invariant feature transform, SIFT), or a speed up robust feature (speed up robust feature, SURF).

In addition to the first processing process, the HOG method further includes the second processing process like graying and gradient calculation, and the third processing process like normalization. Similarly, the local binary pattern LBP method includes the first processing process, and further includes the second processing process and the third processing process. Details are not described one by one in this application.

In this way, before histogram statistics collection is performed on the first data, the first data is processed by using the second processing process, and/or after the histogram statistics collection is performed on the first data, a result of the histogram statistics collection is processed by using the third processing process, so that accuracy of the feature of the first data can be further improved.

It may be understood that, in addition to the first manner, the feature of the first data may be obtained in another possible manner. For example, the first data may be input into an AI model. In an implementation, the AI model may be an encoding part of an autoencoder (autoencoder), or may be a backbone network part of an AI classifier. Further, the AI model may output the feature of the first data. Optionally, before the first data is input into the AI model, the first data may be preprocessed. A specific preprocessing manner is not limited.

### (2) Feature distribution information of a plurality of groups of data

Refer to the foregoing "one group of data". The plurality of groups of data may be determined based on a plurality of groups of downlink channel state information. For example, the plurality of groups of data include the plurality of groups of downlink channel state information; or the plurality of groups of data are data related to positioning of a terminal device. In an example, the plurality of groups of data may include the first data, in other words, the first data is a group of data in the plurality of groups of data.

The feature distribution information of the plurality of groups of data indicates feature distribution of the plurality of groups of data. The feature distribution of the plurality of groups of data may indicate a quantity or a proportion of data belonging to each of a plurality of categories. Optionally, the feature distribution of the plurality of groups of data may be obtained by processing the plurality of groups of data in a second manner. The following describes the second manner with reference to Example 1 and Example 2.

### (2.1) Example 1

In Example 1, the second manner may include the first manner and a third manner. In this case, processing the plurality of groups of data in the second manner to obtain the feature distribution of the plurality of groups of data may be: processing each group of data in the plurality of groups of data in the first manner to obtain a feature of each group of data in the plurality of groups of data; and further, processing features of the plurality of groups of data in the third manner to obtain the feature distribution of the plurality of groups of data.

For example, the third manner may include but is not limited to at least one of the following: calculating an average value for each element in the features of the plurality of groups of data in a dimension of a group, collecting statistics for each element in the features of the plurality of groups of data in the dimension of a group to obtain a quantile, performing Gaussian fitting for each element in the features of the plurality of groups of data in the dimension of a group to obtain an average value and a variance, or performing fitting on another distribution to obtain a parameter value of the distribution.

That the plurality of groups of data include A groups of data, for example, A groups of downlink channel state information is used as an example. When the downlink channel state information is represented by using the first dimension, the second dimension, and the third dimension, the A groups of downlink channel state information may include A groups of W×H×D data, where A is an integer greater than 1. For example, histogram statistics collection is performed on each group of data in the A groups to obtain features of the A groups of data, and each element in the features of the A groups of data is processed in a dimension of A through Gaussian fitting, to obtain feature distribution of the A groups of data.

### (2.2) Example 2

In Example 2, the second manner may include the first manner, or the second manner is the same as the first manner. In this case, the processing the plurality of groups of data in the second manner to obtain the feature distribution of the plurality of groups of data may be: processing the plurality of groups of data in the first manner to obtain the feature distribution of the plurality of groups of data.

That the plurality of groups of data include A groups of data, for example, A groups of downlink channel state information is used as an example. That the downlink channel state information is represented by using the first dimension, the second dimension, and the third dimension may include: The downlink channel state information is represented by using the first dimension, the second dimension, the third dimension, and a fourth dimension. Assuming that the first dimension is represented by W, the second dimension is represented by H, the third dimension is represented by D, and the fourth dimension is represented by A, for an example of the A groups of downlink channel state information, refer to the following manner a or manner b.

In the manner a, the A groups of downlink channel state information may be data of W×H×(D×A), W×(H×A)×D, or (W×A)×H×D, and any one of the first dimension, the second dimension, and the third dimension may be extended to A times.

In the manner b, the A groups of downlink channel state information may be W×H×D×A data, in other words, the A groups of downlink channel state information may be represented by using four-dimensional data.

### For the manner a:

When the A groups of downlink channel state information are the data of W×H×(D×A), W×(H×A)×D, or (W×A)×H×D, for an implementation of obtaining feature distribution of the A groups of downlink channel state information in the first manner, refer to a corresponding implementation in which the downlink channel state information is represented by using the first dimension, the second dimension, and the third dimension.

For example, the downlink channel state information is the W×H×(D×A) data. The downlink channel state information is traversed by using a cell P×Q×T as a unit, where 1≤P≤W, 1≤Q≤H, 1≤T≤D×A, and there may be or may not be overlapping in a traversal process. Histogram statistics collection is performed for each cell P×Q×T to obtain histogram data, and all obtained histogram data forms the feature distribution of the A groups of data.

### For the manner b:

When the downlink channel state information is the W×H×D×A data, for an implementation of obtaining feature distribution of the A groups of downlink channel state information in the first manner, refer to a corresponding implementation in which the downlink channel state information is represented by using the first dimension, the second dimension, and the third dimension.

For example, the downlink channel state information is traversed by using a cell P×Q×T×R as a unit, where 1≤P≤W, 1≤Q≤H, 1≤T≤D, 1≤R≤A, and there may be or may not be overlapping in a traversal process. Histogram statistics collection is performed for each cell P×Q×T×R to obtain histogram data, and all obtained histogram data forms the feature distribution of the A groups of data.

Optionally, in the foregoing Example 1 and Example 2, the A groups of downlink channel state information may include A groups of downlink channel state information collected by the terminal device at different time points in a time period. For example, the terminal device collects one or more groups of downlink channel state information at a time point 1, collects one or more groups of downlink channel state information at a time point 2, and so on. The terminal device collects a total of A groups of downlink channel state information in a time period.

In a wireless communication system, application of an AI model can significantly improve performance of the communication system. Because a training process of the AI model has a high requirement on computing power, an AI model used by the terminal device is usually not generated by the terminal device.

For the AI model used by the terminal device, a possible generation manner is: The terminal device may send, to a server, data (which may be referred to as training data) collected by the terminal device located in a specific region (for example, a region 1). Because the data collected by the terminal device is sensitive, the terminal device reports the collected data to a server associated with the terminal device. In other words, the training data received by the server is reported by the terminal device associated with the server. Further, the server generates an AI model based on the training data, and sends configuration information of the AI model to the terminal device, so that the terminal device may use the AI model in the region 1 based on the configuration information of the AI model.

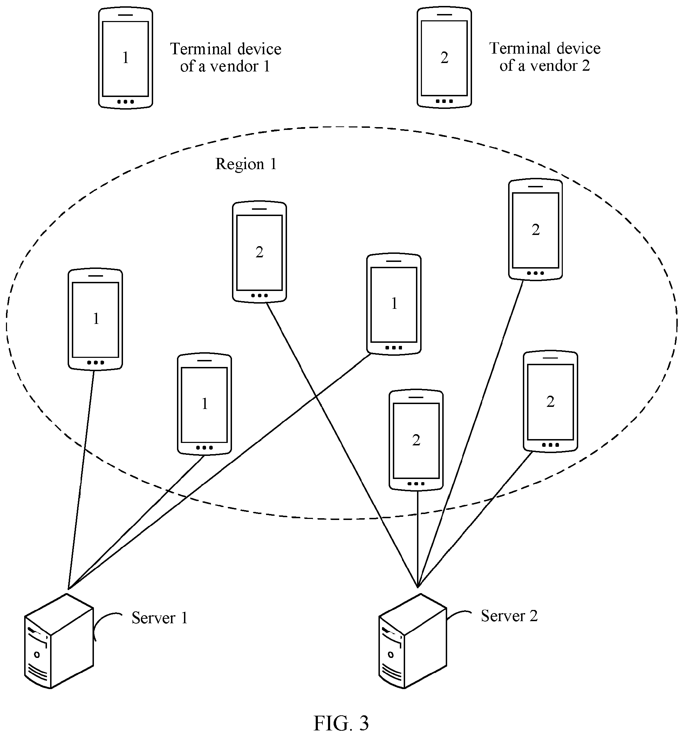

As shown in FIG. 3, two terminal device vendors are used as an example. The two terminal device vendors are a vendor 1 and a vendor 2 respectively. The vendor 1 manages a server 1, and the vendor 2 manages a server 2. In the region 1, terminal devices of the vendor 1 include m1 terminal devices, and terminal devices of a vendor 2 include m2 terminal devices. Both m1 and m2 are positive integers, and m1 and m2 may be the same or different. The m1 terminal devices separately send, to the server 1, training data collected by the m1 terminal devices in the region 1, so that the server 1 may generate an AI model 1 based on the received training data. Similarly, the m2 terminal devices separately send, to the server 2, training data collected by the m2 terminal devices in the region 1, so that the server 2 may generate an AI model 2 based on the received training data.

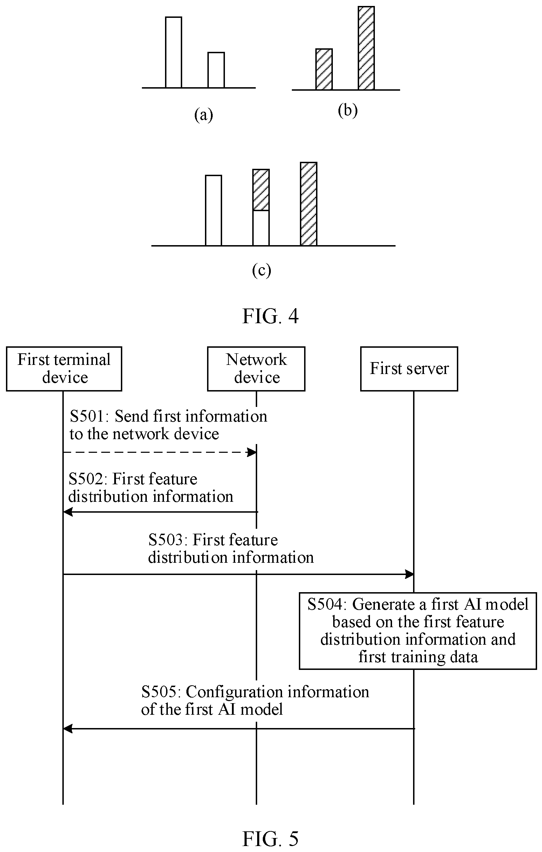

Considering that distribution of terminal devices of the two vendors in the region 1 may be different (for example, quantities of terminal devices of the two vendors are different), feature distribution of training data uploaded to respective servers is also different. For example, feature distribution of the training data of the AI model 1 is shown in (a) in FIG. 4, and feature distribution of the training data of the AI model 2 is shown in (b) in FIG. 4. Further, an example in which the region 1 includes the m1 terminal devices and the m2 terminal devices is used. (c) in FIG. 4 is a diagram of feature distribution of total training data in the region 1 (including the training data collected by the m1 terminal devices in the region 1 and the training data collected by the m2 terminal devices in the region 1).

It can be learned from FIG. 4 that the feature distribution of the training data of the AI model 1 is different from the feature distribution of the total training data. Consequently, when the terminal device of the vendor 1 uses the AI model 1 in the region 1, performance of the AI model 1 is poor. For example, after the terminal device of the vendor 1 encodes the downlink channel state information in the region 1 by using the AI model 1, and sends encoded downlink channel state information to the network device, downlink channel state information obtained by the network device through decoding is distorted. For another example, a positioning result obtained by the terminal device of the vendor 1 by using the AI model in the region 1 is inaccurate. Similarly, the feature distribution of the training data of the AI model 2 is also different from the feature distribution of the total training data. Consequently, when the terminal device of the vendor 2 uses the AI model 2 in the region 1, performance of the AI model 2 is poor.

Based on this, an embodiment of this application provides a communication method, to resolve a problem that performance of an AI model is affected because feature distribution of training data of an AI model is different from feature distribution of total training data in a specific region.

### Embodiment 1

FIG. 5 is a schematic flowchart corresponding to a communication method according to Embodiment 1 of this application. In FIG. 5, an example in which a terminal device, a network device, and a server are used as execution bodies of the interaction illustration is used for illustrating the method. However, this application does not limit the execution body of the interaction illustration. For example, the terminal device in FIG. 5 may alternatively be a chip, a chip system, or a processor that supports the terminal device in implementing the method. The network device in FIG. 5 may alternatively be a chip, a chip system, or a processor that supports the access network device in implementing the method, or may be a logical module or software that can implement all or some functions of the access network device. The server in FIG. 5 may alternatively be a chip, a chip system, or a processor that supports the server in implementing the method.

As shown in FIG. 5, the method includes the following steps.

**S501:** A first terminal device sends first information to a network device, where the first information includes at least one of the following: feature information of P1 groups of data and feature distribution information of the P1 groups of data, where the P1 groups of data are data that is collected in a first time period by the first terminal device located in a first region, and P1 is a positive integer.

In this embodiment of this application, there may be a plurality of manners of dividing the first region. In an example, the first region may include a plurality of cells. The plurality of cells may belong to a same base station, or may belong to different base stations. The following uses an example in which "the plurality of cells belong to a same base station, and the network device is a base station to which the plurality of cells belong" for description.

For example, considering that the terminal device has mobility, the first terminal device may remain staying in the first region in the first time period, or the first terminal device may move out of the first region before the first time period ends. If the first terminal device remains staying in the first region in the first time period, after the first time period ends, the first terminal device may obtain the feature information and/or the feature distribution information of the P1 groups of data based on the P1 groups of data collected in the first time period, and send the first information to the network device. Alternatively, if the first terminal device moves out of the first region before the first time period ends, for example, start time of the first time period is a time point t1, end time of the first time period is a time point t2, the first terminal device moves out of the first region at a time point t3, and the time point t3 is before the time point t2, before moving out of the first region, the first terminal device may obtain the feature information and/or the feature distribution information of the P1 groups of data based on the P1 groups of data (that is, the P1 groups of data collected between the time point t1 and the time point t3) collected in the first time period, and send the first information to the network device. For an implementation in which the first terminal device obtains the feature information and/or the feature distribution information of the P1 groups of data, refer to the foregoing descriptions. Details are not described again.

Optionally, before S501, the method may further include: The network device sends first request information to the terminal device located in the first region. The first request information is used to request the terminal device located in the first region to collect data in the first time period and report feature information and/or feature distribution information of the collected data. The terminal device located in the first region includes the first terminal device, so that the first terminal device may receive the first request information.

The network device may send the first request information in a plurality of manners. For example, the network device may send, in a broadcast manner, the first request information to the terminal device located in the first region.

For example, the first request information may include at least one of the following.
◇First indication information: The first indication information indicates that information the terminal device is requested to report is feature information and/or feature distribution information of data collected by the terminal device.
◇Second indication information: The second indication information indicates a first manner and/or a second manner. The first manner is used to determine the feature information of the data collected by the terminal device, and the second manner is used to determine the feature distribution information of the data collected by the terminal device. For descriptions of the first manner and the second manner, refer to the foregoing descriptions.
OTerminal configuration information: The terminal configuration information indicates a configuration condition that should be met when the first terminal device collects the P1 groups of data. For example, the terminal configuration information includes an identifier of a first frequency band and/or a first antenna quantity. In this case, the configuration condition that should be met when the first terminal device collects the P1 groups of data is that a frequency band used by the first terminal device is the first frequency band, and/or an antenna quantity of the first terminal device is equal to the first antenna quantity.
◇Trigger information: The trigger information includes a trigger manner and/or a trigger configuration, the trigger manner includes at least one of the following: event triggering and periodic triggering, and the trigger configuration includes at least one of the following: a trigger event and a trigger periodicity. For example, the trigger event is, for example, that communication system performance meets a condition, and the communication system performance may include at least one of the following: a throughput, a bit error rate (bit error rate, BER), a data block error rate (block error rate, BLER), an acknowledgement (acknowledgement, ACK)/negative acknowledgement (negative acknowledgement, NACK) ratio, a retransmission rate, and the like. For another example, the trigger event may be that a measurement quantity of the terminal device meets a condition, and the measurement quantity may include at least one of the following: a signal to interference plus noise ratio (signal to interference plus noise ratio, SINR), reference signal received power (reference signal received power, RSRP), a received signal strength indicator (received signal strength indication, RSSI), reference signal received quality (reference signal received quality, RSRQ), and received signal code power (received signal code power, RSCP). In this way, after receiving the first request information, the terminal device may collect data in the first region in the first time period based on the trigger information.
◊Quantity information: The quantity information indicates a value of P1.
◇Region information: The region information indicates the first region. For example, if the first region includes a plurality of cells, the region information may include identifiers of the plurality of cells. A cell 1 in the plurality of cells is used as an example, and an identifier of the cell 1 may be a physical cell identifier (physical cell identifier, PCI) of the cell 1.
◇Time period information: The time period information indicates the first time period. Optionally, the time period information may include start time and end time of the first time period, or include start time (or end time) of the first time period and duration of the first time period. For example, if the start time of the first time period is X1(year)-X2(month)-X3(day) X4(hour):X5(minute), and the end time is Y1(year)-Y2(month)-Y3(day) Y4(hour):Y5(minute), the time period information may include values of X1 to X5 and Y1 to Y5.
◇Third indication information: The third indication information indicates a condition that needs to be met by at least one feature of the data collected by the terminal device. One feature of the at least one feature is used as an example. A condition that needs to be met by the feature may be: when a distance between the feature and a vector is greater than or equal to a threshold, where definitions of the vector, the threshold, or the distance should be included in the third indication information or agreed in advance. In an implementation method, the vector may be a feature of a training set of a current AI model, and the distance may be one of distance definitions such as a Euclidean distance, a Manhattan distance, a Chebyshev distance, a Minkowski distance, a cosine similarity, a Mahalanobis distance, and a Hamming distance. In this way, after the terminal device collects a group of data, if at least one feature of the group of data does not meet the foregoing condition, the terminal device may determine that the group of data is invalid data, and the P1 groups of data are all valid data and do not include the invalid data.

It may be understood that, when the request information does not include the first indication information, whether the terminal device reports the feature information or the feature distribution information may be predefined in a protocol or preconfigured. When the request information does not include the second indication information, a manner of determining the feature information and/or the feature distribution information may be predefined in the protocol or preconfigured. When the request information does not include the region information, a range of the first region may be predefined in the protocol or preconfigured. When the request information does not include the first time period, for example, the start time of the first time period may be determined based on receiving time of the request information, and the duration of the first time period may be predefined in the protocol or preconfigured. When the request information does not include the third indication information, the terminal device may consider that a plurality of groups of data that are collected in the first time period by the terminal device located in the first region are all valid data. For another information item, refer to the descriptions for understanding. Details are not described one by one.

Optionally, in S501, the terminal device may further send indication information to the network device. The indication information indicates at least one of the terminal configuration information, the trigger information, the quantity information, the region, and the time period that correspond to the P1 groups of data. For example, the indication information includes the region information and the time period information.

**S502:** The network device sends first feature distribution information to the first terminal device, and correspondingly, the first terminal device receives the first feature distribution information.

As described above, the network device may receive the first information reported by the first terminal device. In addition, the network device may further receive information reported by another terminal device, for example, second information reported by a second terminal device and third information reported by a third terminal device. The second information includes at least one of the following: feature information of P2 groups of data and feature distribution information of the P2 groups of data. The P2 groups of data are data that is collected in the first time period by the second terminal device located in the first region, and P2 is a positive integer. The third information includes at least one of the following: feature information of P3 groups of data and feature distribution information of the P3 groups of data. The P3 groups of data are data that is collected in the first time period by the third terminal device located in the first region, and P3 is a positive integer.

In this way, after receiving information reported by a plurality of terminal devices, the network device may obtain the first feature distribution information through summarization. In other words, the first feature distribution information is determined based on the first information (optionally, and the second information and the third information). The first feature distribution information indicates feature distribution of the data that is collected in the first time period by the terminal device located in the first region. The terminal device located in the first region may include terminal devices associated with different servers. For example, the terminal device located in the first region includes a terminal device (for example, the first terminal device and the second terminal device) associated with a first server, and a terminal device (for example, the third terminal device) associated with a second server. In other words, the first feature distribution information indicates feature distribution of total training data in the first region.

A specific implementation in which "the network device obtains the first feature distribution information through summarization" is not limited in this embodiment of this application. In a possible implementation, for example, the network device receives the first information and the second information. The first information includes feature information of the P1 groups of data, and the second information includes feature information of the P2 groups of data. Therefore, the network device may process a feature of the P1 groups of data and a feature of the P2 groups of data (for example, process the feature of the P1 groups of data and the feature of the P2 groups of data in the foregoing third manner), to obtain the first feature distribution information.

The network device may send the first feature distribution information to the first terminal device in a plurality of implementations. The following describes three possible implementations with reference to an implementation 1 to an implementation 3.

### (1) Implementation 1

In the implementation 1, the network device may actively send the first feature distribution information to the terminal device located in the first region. For example, the network device sends, in the broadcast manner, the first feature distribution information to the terminal device located in the first region.

### (2) Implementation 2

In the implementation 2, the network device may send the first feature distribution information to the first terminal device based on a request of the first terminal device. For example, before S502, the first terminal device may send second request information to the network device. The second request information is used to request to send the first feature distribution information to the first terminal device. Correspondingly, after receiving the second request information, the network device may send the first feature distribution information to the first terminal device.

Further, optionally, before the first terminal device sends the second request information to the network device, the first terminal device may receive third request information from the first server. The third request information is used to request to send the first feature distribution information to the first server. The first server is associated with the first terminal device. In other words, the first terminal device may request the first feature distribution information from the network device based on a request of the first server.

For example, the third request information may include the region information and/or the time period information, and content included in the second request information may be determined based on content included in the third request information. For example, the content included in the second request information is the same as the content included in the third request information.

### (3) Implementation 3

In the implementation 3, the first terminal device may send second request information to the network device. The second request information is used to request to send the first feature distribution information to the first terminal device. Correspondingly, after receiving the second request information, the network device may learn that the first feature distribution information needs to be sent to the first terminal device. For example, the first terminal device may send the second request information to the network device before the network device sends the first request information (refer to the descriptions in S501). In other words, after receiving the second request information, the network device may send the first request information based on the second request information.

Optionally, before the first terminal device sends the second request information to the network device, the first terminal device may receive third request information from the first server. The third request information is used to request to send the first feature distribution information to the first server.

For example, the third request information may include at least one of the following: the first indication information, the second indication information, the terminal configuration information, the trigger information, the quantity information, the region information, the time period information, and the third indication information. Content included in the second request information may be determined based on content included in the third request information. For example, the content included in the second request information is the same as the content included in the third request information. Optionally, content included in the first request information may be determined based on the content included in the second request information. For example, the content included in the first request information is the same as the content included in the second request information.

It may be understood that a main difference between the implementation 2 and the implementation 3 lies in that, in the implementation 2, the network device autonomously determines the first feature distribution information, and sends the first feature distribution information to the first terminal device based on the request of the first terminal device; and in the implementation 3, the network device determines the first feature distribution information based on the request of the first terminal device, and sends the first feature distribution information to the first terminal device.

Optionally, in S502, the network device may further send indication information to the first terminal device. The indication information indicates at least one of the terminal configuration information, the trigger information, the quantity information, the region information, and the time period information that correspond to the first feature distribution information. For example, the indication information includes the region information and the time period information.

Optionally, in another possible implementation, the first information in S501 may also include the P1 groups of data, but does not include the feature information of the P1 groups of data or the feature distribution information of the P1 groups of data. In this case, the network device may determine the first feature distribution information based on the P1 groups of data (and optionally, the P2 groups of data and the P3 groups of data).

Optionally, S501 is an optional step. For example, in the first time period, the first terminal device may not be in the first region, and the first terminal device may not send the first information to the network device.

In this embodiment of this application, there may be an intersection set between a terminal device that reports feature information and/or feature distribution information to the network device and a terminal device that receives the first feature distribution information. In other words, a terminal device may report the feature information and/or the feature distribution information to the network device, but does not receive the first feature distribution information from the network device; a terminal device may not report the feature information and/or the feature distribution information to the network device, but receives the first feature distribution information from the network device; or a terminal device reports the feature information and/or the feature distribution information to the network device, and also receives the first feature distribution information from the network device.

**S503:** The first terminal device sends the first feature distribution information to the first server, and correspondingly, the first server receives the first feature distribution information from the first terminal device.

Optionally, the first terminal device may further send indication information to the first server. The indication information indicates at least one of the terminal configuration information, the trigger information, the quantity information, the region information, and the time period information that correspond to the first feature distribution information. For example, the indication information includes the region information and the time period information.

**S504:** The first server generates a first AI model based on the first feature distribution information and first training data.

For example, the first server uses the first feature distribution information as auxiliary information for generating the first AI model. For example, the first server may adjust a training process based on the first feature distribution information, so that the first AI model generated based on the first training data is close to an AI model generated based on the total training data in the first region. For the first training data, refer to the following descriptions. A specific implementation in which "the first server generates the first AI model based on the first feature distribution information and the first training data" is not limited in this embodiment of this application.

Optionally, in an example not forming part of the invention, after receiving the first feature distribution information, the first server may generate the first AI model based on the first feature distribution information and the first training data.

In embodiments of the invention, after receiving the first feature distribution information, the first server first determines whether a difference between the first feature distribution information and the second feature distribution information meets a first condition. If the difference meets the first condition, the first AI model is generated based on the first training data and the first feature distribution information; or if the difference does not meet the first condition, the first AI model does not need to be generated.

The second feature distribution information is pre-obtained by the first server. For example, before S504, the first server generates a second AI model based on second training data and the second feature distribution information. Further, after the first server receives the first feature distribution information, if the first server determines that the difference between the first feature distribution information and the second feature distribution information meets the first condition, it indicates that the second AI model is not applicable to current data, and the second AI model needs to be updated. Further, the first server generates the first AI model based on the first training data and the first feature distribution information. If the first server determines that the difference between the first feature distribution information and the second feature distribution information does not meet the first condition, it indicates that the second model is still applicable to the current data, and the second AI model does not need to be updated.

In this way, this embodiment of this application provides a determining basis for updating an AI model. To be specific, the first server may determine, based on the first feature distribution information and the second feature distribution information, whether the AI model needs to be updated, so that the first server can conveniently and quickly identify whether the AI model needs to be updated, to update the AI model more properly, and avoid heavy processing load of a server caused by frequent AI model updates or poor performance of the AI model caused by the AI model that is not updated for a long time.

**(1)** That the difference between the first feature distribution information and the second feature distribution information meets the first condition is described.

For example, there may be a plurality of indicators for measuring the difference between the first feature distribution information and the second feature distribution information.

In an example, if the indicator is a distance, that the difference between the first feature distribution information and the second feature distribution information meets the first condition may mean that a distance between the first feature distribution information and the second feature distribution information is greater than or equal to a distance threshold. Optionally, the distance threshold may be preconfigured.

The distance between the first feature distribution information and the second feature distribution information may include but is not limited to one or more of the following: a cosine similarity, a Euclidean distance, a Manhattan distance (Manhattan distance), a standardized Euclidean distance (standardized Euclidean distance), a squared Euclidean distance (squared Euclidean distance), a Canberra distance (Canberra distance), a Chebyshev distance (Chebyshev distance), a correlation coefficient distance (correlation coefficient distance), a Mahalanobis distance (Mahalanobis distance), and a Minkowski distance (Minkowski distance).

In another example, if the indicator is a deviation measure between two types of distribution, that the difference between the first feature distribution information and the second feature distribution information meets the first condition may mean that the distance between the first feature distribution information and the second feature distribution information is greater than or equal to a deviation measure threshold between the two types of distribution. Optionally, the deviation measurement threshold may be preconfigured.

The deviation measure between the first feature distribution information and the second feature distribution information may include but is not limited to one or more of the following: a KL divergence, a Kolmogorov-Smirnov test (Kolmogorov-Smirnov test, K-S test), a model population stability index (population stability index, PSI), a Hellinger distance (Hellinger distance), a Chi-square test (Chi-squared test), a cross entropy, a feature cardinality, a frequency, or the like.

**(2)** The first training data is described.

**(2.1)** In a possible implementation, the first server may send fourth request information to the terminal device associated with the first server. The fourth request information is used to request the terminal device to report data that is collected in the first time period by the terminal device located in the first region. In other words, the first server may request the terminal device to report data previously collected by the terminal device.

For example, if the terminal device associated with the first server includes the first terminal device, the first terminal device may send the P1 groups of data to the first server. In this case, the first training data includes the P1 groups of data. For another example, if the terminal device associated with the first server includes the second terminal device, the second terminal device may send the P2 groups of data to the first server. In this case, the first training data includes the P2 groups of data.

**(2.2)** In another possible implementation, the first server may send fourth request information to the terminal device associated with the first server. The fourth request information is used to request the terminal device to report data that is collected in a second time period by the terminal device located in the first region. Duration of the second time period is the same as that of the first time period, and start time of the second time period is later than the end time of the first time period. In other words, the first server may request the terminal device to collect data again in the second time period, and report the collected data. Usually, a time interval between the start time of the second time period and the end time of the first time period is small. Therefore, it may be considered that feature distribution of the data that is collected in the first time period by the terminal device located in the first region is the same as feature distribution of the data that is collected in the second time period by the terminal device located in the first region. In other words, it may be considered that the first feature distribution information also indicates the feature distribution of the data that is collected in the second time period by the terminal device located in the first region.

For example, the terminal device associated with the first server includes the first terminal device, and the first terminal device collects Q1 groups of data in the first region in the second time period, and reports the Q1 groups of data to the first server. In this case, the first training data includes the Q1 groups of data. For another example, the terminal device associated with the first server includes the second terminal device, and the second terminal device collects Q2 groups of data in the first region in the second time period, and reports the Q2 groups of data to the first server. In this case, the first training data includes the Q2 groups of data. Both Q1 and Q2 are positive integers.

In this way, when the first server determines that the AI model needs to be updated, the first server may send the fourth request information to the first terminal device, so that the first terminal device reports the collected data to the first server based on a fourth request information. In other words, when the first server does not need to update the AI model, the first terminal device may not need to report the collected data to the first server, effectively saving a transmission resource.

It may be understood that there may be an intersection set between a terminal device that sends the training data to the first server and a terminal device that sends the first feature distribution information to the first server.

In addition, in another possible implementation, the first training data may alternatively be data pre-obtained by the first server, for example, data pre-stored in the first server.

**S505:** The first server sends configuration information of the first AI model to the first terminal device.

For example, the first server may actively send the configuration information of the first AI model to one or more terminal devices associated with the first server; or the first server may send the configuration information of the first AI model to the terminal device based on a request of one or more terminal devices associated with the first server. In other words, the terminal device that sends the first feature distribution information to the first server and a terminal device that receives the configuration information of the first AI model may be a same terminal device or may be different. Herein, an example in which the first server sends the configuration information of the first AI model to the first terminal device is used for description.

For example, the configuration information of the first AI model is used to configure the first AI model. For example, the configuration information of the first AI model includes a parameter of the first AI model, and the parameter of the first AI model includes, for example, a structure parameter and/or a weight of the first AI model. For another example, the configuration information of the first AI model includes a profile (profile) of the first AI model. For another example, the configuration information of the first AI model includes obtaining information of the first AI model, for example, an obtaining address, an obtaining protocol, or a model file format. The obtaining address may be, for example, an internet protocol (internet protocol, IP) address, or may be an identifier and/or an address of a device. In this way, after receiving the configuration information of the first AI model, the first terminal device may obtain the first AI model based on the configuration information of the first AI model and use the first AI model in the first region.

Optionally, an application scenario of the first AI model is not limited in this embodiment of this application. In correspondence to different application scenarios, the AI model may be an algorithm model having different functions. For example, the application scenario of the first AI model may include but is not limited to one or more of the following: downlink channel state information encoding on a terminal device side, beam management on the terminal device side, and positioning on the terminal device side.

Optionally, after S505, if the first server receives third feature distribution information, the first server may determine whether a difference between the third feature distribution information and the first feature distribution information meets the first condition. If the first condition is met, the first server may generate a new AI model based on the third feature distribution information, to update the AI model.

In the foregoing method, the network device sends the first feature distribution information to the first terminal device, and the first terminal device sends the first feature distribution information to the first server associated with the first terminal device. In this way, although the first training data used by the first server to generate the AI model is data collected in the first region by the terminal device associated with the first server, and feature distribution of the first training data may be different from feature distribution of the total training data in the first region, the first server may obtain the first feature distribution information (indicating the feature distribution of the total training data in the first region). Therefore, the first server may use the first feature distribution information as auxiliary information for generating the AI model, so that an AI model generated based on the first training data is close to an AI model generated based on the total training data in the first region, effectively improving performance of the AI model. Based on the solution in Embodiment 1, the following describes two possible implementation procedures with reference to Embodiment 2 and Embodiment 3.

### Embodiment 2

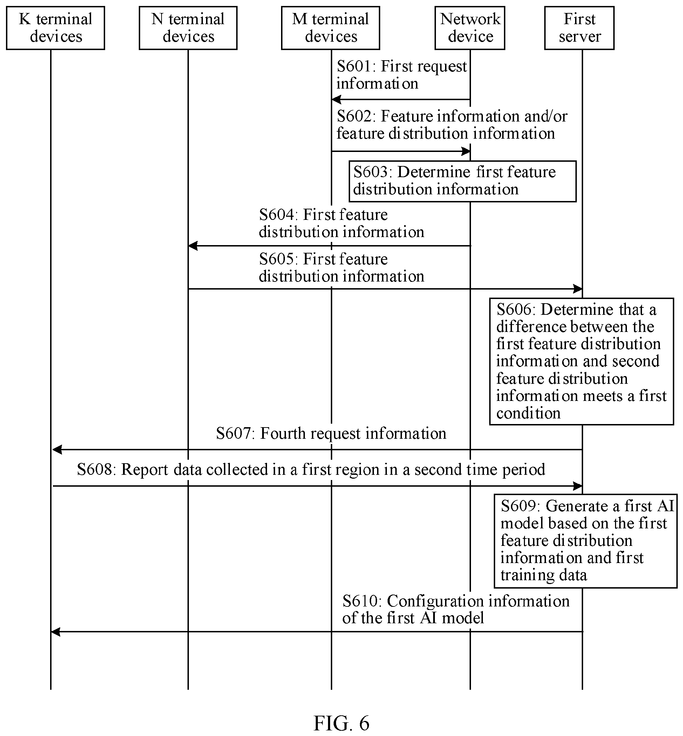

FIG. 6 is a schematic flowchart corresponding to a communication method according to Embodiment 2 of this application. The procedure shown in FIG. 6 may correspond to the implementation 1 in Embodiment 1.

As shown in FIG. 6, the method includes the following steps.

S601: A network device sends first request information to a terminal device located in a first region, and correspondingly, M terminal devices located in the first region receive the first request information, where M is a positive integer.

Herein, the first request information is used to request the terminal device located in the first region to collect data in the first time period and report feature information and/or feature distribution information of the collected data. For example, the network device may send the first request information in a broadcast manner.

For example, there may be a plurality of factors that trigger the network device to send the first request information. For example, the network device periodically determines feature distribution of total training data in a specified time period in the first region, and the network device may periodically send request information, to request the terminal device located in the first region to collect data in the specified time period, and report feature information and/or feature distribution information of the collected data.

S602: The M terminal devices collect data in the first region in the first time period, and report feature information and/or feature distribution information of the collected data to the network device.

The M terminal devices are associated with different servers. For example, a part of the M terminal devices are associated with a server maintained by a vendor 1, and the other part of the M terminal devices are associated with a server maintained by a vendor 2.

S603: The network device determines first feature distribution information based on the feature information and/or the feature distribution information reported by the M terminal devices.

S604: The network device sends the first feature distribution information to the terminal device located in the first region, and correspondingly, N terminal devices located in the first region receive the first feature distribution information, where N is a positive integer.

For example, the network device may send the first feature distribution information in the broadcast manner.

Optionally, there may be an intersection set between the M terminal devices and the N terminal devices. For example, if the M terminal devices are still located in the first region, the N terminal devices may include the M terminal devices.

S605: The N terminal devices respectively send the first feature distribution information to servers associated with the N terminal devices. For example, the N terminal devices include a first terminal device, and the first terminal device is associated with a first server.

S606: The first server receives the first feature distribution information, and determines that a difference between the first feature distribution information and second feature distribution information meets a first condition.

S607: The first server sends fourth request information to K terminal devices, where the fourth request information is used to request the K terminal devices to collect data in the first region in a second time period and report the collected data, and K is a positive integer.

Optionally, there may be an intersection set between the K terminal devices and the N terminal devices.

S608: The K terminal devices collect the data in the first region in the second time period, and report the collected data to the first server.

S609: The first server generates a first AI model based on the first feature distribution information and first training data. The first training data includes the data that is collected by the K terminal devices in the first region in the second time period.

S610: The first server sends configuration information of the first AI model to the K terminal devices.

### Embodiment 3

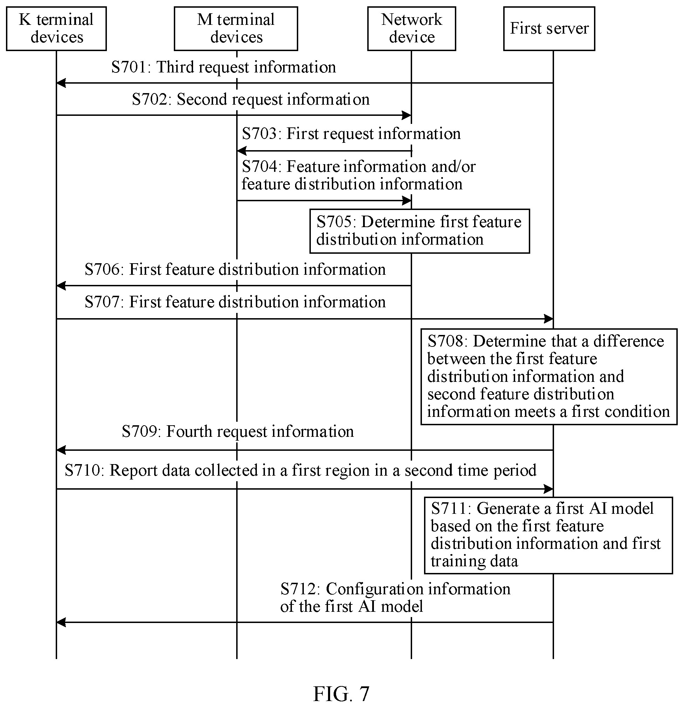

FIG. 7 is a schematic flowchart corresponding to a communication method according to Embodiment 3 of this application. The procedure shown in FIG. 7 may correspond to the implementation 3 in Embodiment 1.

As shown in FIG. 7, the method includes the following steps.

S701: A first server sends third request information to K terminal devices associated with the first server, where the third request information is used to request the K terminal devices to send first feature distribution information to the first server.

For example, the third request information may include at least one of the following: first indication information, second indication information, terminal configuration information, trigger information, quantity information, region information, time period information, and third indication information.

Optionally, the K terminal devices are terminal devices located in a first region.

S702: The K terminal devices send second request information to a network device.

For example, the K terminal devices include a first terminal device, and the second request information sent by the first terminal device is used to request to send the first feature distribution information to the first terminal device.

S703: After receiving the second request information of the K terminal devices, the network device sends first request information to the terminal device located in the first region, and correspondingly, M terminal devices located in the first region receive the request information.

For example, the network device sends the first request information in a broadcast manner.

Optionally, the M terminal devices include the K terminal devices, and may further include a terminal device associated with a second server or another server.

S704: The M terminal devices collect data in the first region in a first time period, and report feature information and/or feature distribution information of the collected data to the network device.

S705: The network device determines the first feature distribution information based on the feature information and/or the feature distribution information reported by the M terminal devices.

S706: The network device sends the first feature distribution information to the K terminal devices, and correspondingly, the K terminal devices receive the first feature distribution information.

For example, if the K terminal devices are still located in the first region and do not move out of the first region, the network device may send the first feature distribution information to the K terminal devices.

S707: The K terminal devices send the first feature distribution information to the first server.

S708: After receiving the first feature distribution information, the first server determines that a difference between the first feature distribution information and second feature distribution information meets a first condition.

S709: The first server sends fourth request information to the K terminal devices, where the fourth request information is used to request the K terminal devices to collect data in the first region in a second time period and report the collected data.

S710: The K terminal devices collect the data in the first region in the second time period, and report the collected data to the first server.

S711: The first server generates a first AI model based on the first feature distribution information and first training data. The first training data includes the data that is collected by the K terminal devices in the first region in the second time period.

S712: The first server sends configuration information of the first AI model to the K terminal devices.

It may be understood that the foregoing descriptions are provided by using an example in which both the terminal device that sends the first feature distribution information to the first server and the terminal device that sends the data to the first server are the K terminal devices. Specific implementation is not limited thereto.

### Embodiment 4

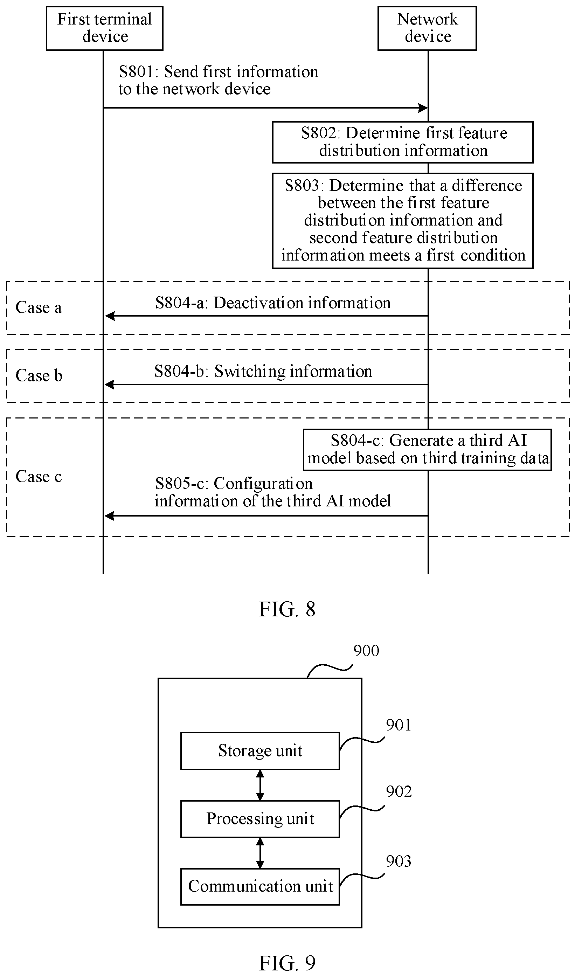

FIG. 8 is a schematic flowchart corresponding to a communication method according to Embodiment 4 of this application. In FIG. 8, an example in which a terminal device and a network device are used as execution bodies of the interaction illustration is used for illustrating the method. However, this application does not limit the execution body of the interaction illustration. For example, the terminal device in FIG. 8 may alternatively be a chip, a chip system, or a processor that supports the terminal device in implementing the method. The network device in FIG. 8 may alternatively be a chip, a chip system, or a processor that supports an access network device in implementing the method, or may be a logical module or software that can implement all or some functions of the access network device.

As shown in FIG. 8, the method includes the following steps.

**S801:** A first terminal device sends first information to the network device, where the first information includes at least one of the following: feature information of P1 groups of data and feature distribution information of the P1 groups of data, where the P1 groups of data are data that is collected in a first time period by the first terminal device located in a first region.

Optionally, before S801, the method may further include: The network device sends first request information to a terminal device located in the first region. The first request information is used to request the terminal device located in the first region to collect data in the first time period and report feature information and/or feature distribution information of the collected data. The terminal device located in the first region includes the first terminal device, so that the first terminal device may receive the first request information.

Optionally, in S801, the terminal device may further send indication information to the network device. The indication information indicates at least one of terminal configuration information, trigger information, quantity information, region information, and time period information that correspond to the P1 groups of data. For example, the indication information includes the region information and the time period information.

**S802:** The network device determines first feature distribution information based on the first information.

As described above, the network device may receive the first information reported by the first terminal device. In addition, the network device may further receive information reported by another terminal device, for example, second information reported by a second terminal device and third information reported by a third terminal device. The second information includes at least one of the following: feature information of P2 groups of data and feature distribution information of the P2 groups of data. The P2 groups of data are data that is collected in the first time period by the second terminal device located in the first region. The third information includes at least one of the following: feature information of P3 groups of data and feature distribution information of the P3 groups of data. The P3 groups of data are data that is collected in the first time period by the third terminal device located in the first region, and P3 is a positive integer.

In this way, after receiving information reported by a plurality of terminal devices, the network device may obtain the first feature distribution information through summarization. The first feature distribution information indicates feature distribution of the data that is collected in the first time period by the terminal device located in the first region. For example, "the data that is collected in the first time period by the terminal device located in the first region " includes the P1 groups of data, the P2 groups of data, and the P3 groups of data. In this case, the first feature distribution information indicates feature distribution of the P1 groups of data, the P2 groups of data, and the P3 groups of data. In other words, the first feature distribution information indicates feature distribution of third training data. For details about the third training data, refer to the following.

**S803:** The network device determines that a difference between the first feature distribution information and second feature distribution information meets a first condition.

Optionally, the second feature distribution information is pre-obtained by the network device. For example, the second feature distribution information indicates feature distribution of training data of a fourth AI model, and the fourth AI model is an AI model currently used by the terminal device located in the first region.

If the network device determines that the difference between the first feature distribution information and the second feature distribution information meets the first condition, it indicates that the fourth AI model is not applicable to current data, in other words, performance of the fourth AI model is currently poor. If the network device determines that the difference between the first feature distribution information and the second feature distribution information does not meet the first condition, it indicates that the fourth AI model is still applicable to the current data.

For example, after determining that the difference between the first feature distribution information and the second feature distribution information meets the first condition, the network device may perform S804-a (that is, a case a), perform S804-b (that is, a case b), or perform S804-c and S805-c (that is, a case c).

**S804-a:** The network device sends deactivation information to the terminal device (for example, the first terminal device) located in the first region, where the deactivation information indicates to deactivate an AI model or an AI mode, and correspondingly, the terminal device located in the first region receives the deactivation information.

Herein, the deactivation information indicates to deactivate the AI model or the AI mode, which may be understood as: to no longer use the AI model or exit the AI mode. For example, before receiving the deactivation information, the first terminal device encodes downlink channel state information by using a second AI model. In this case, after receiving the deactivation information, the first terminal device may encode the downlink channel state information by using a conventional method, instead of encoding the downlink channel state information by using the AI model.

**S804-b:** The network device sends switching information to the terminal device (for example, the first terminal device) located in the first region, where the switching information indicates to switch a used AI model to a target AI model, and correspondingly, the terminal device in the first region receives the switching indication information.

Optionally, the switching information may include at least one of the following: identification information of the target AI model and configuration information of the target AI model. For the configuration information of the target AI model, refer to the foregoing descriptions of the configuration information of the first AI model.

For example, the network device sends configuration information of a plurality of AI models (for example, an AI model 1, an AI model 2, and an AI model 3) to the first terminal device in advance. Feature distribution information 1 indicates feature distribution of training data of the AI model 1, feature distribution information 2 indicates feature distribution of training data of the AI model 2, and feature distribution information 3 indicates feature distribution of training data of the AI model 3. If the AI model currently used by the first terminal device is the AI model 1, after determining that a difference between the first feature distribution information and the feature distribution information 1 meets the first condition, the network device may select the target AI model from the AI model 2 and the AI model 3 based on a difference between the feature distribution information 2 and the first feature distribution information and a difference between the feature distribution information 3 and the first feature distribution information. For example, if the difference between the feature distribution information 2 and the first feature distribution information is smaller, the AI model 2 may be selected as the target AI model. In this case, the switching information may include identification information of the AI model 2.

**S804-c:** The network device generates a third AI model based on the third training data.

The third training data is described herein.
**(1)** In a possible implementation, after determining that the difference between the first feature distribution information and the second feature distribution information meets the first condition, the network device may send fifth request information to the terminal device located in the first region. The fifth request information is used to request the terminal device to report the data that is collected in the first time period by the terminal device located in the first region. In other words, the network device may request the terminal device to report data previously collected by the terminal device. For example, if the terminal device located in the first region includes the first terminal device, the second terminal device, and the third terminal device, the first terminal device may send the P1 groups of data to the network device, the second terminal device may send the P2 groups of data to the network device, and the third terminal device may send the P3 groups of data to the network device. In this case, the third training data includes the P1 groups of data, the P2 groups of data, and the P3 groups of data.
   Alternatively, the first terminal device is used as an example, the P1 groups of data may be included in the first information. In this case, the network device does not need to send the fifth request information.
**(2)** In another possible implementation, after determining that the difference between the first feature distribution information and the second feature distribution information meets the first condition, the network device may send fifth request information to the terminal device located in the first region. The fifth request information is used to request the terminal device to report data that is collected in a second time period by the terminal device located in the first region. Duration of the second time period is the same as that of the first time period, and start time of the second time period is later than end time of the first time period. In other words, the network device may request the terminal device to collect data again in the second time period, and report the collected data. Usually, a time interval between the start time of the second time period and the end time of the first time period is small. Therefore, it may be considered that feature distribution of the data that is collected in the first time period by the terminal device located in the first region is the same as feature distribution of the data that is collected in the second time period by the terminal device located in the first region. In other words, it may be considered that the first feature distribution information also indicates the feature distribution of the data that is collected in the second time period by the terminal device located in the first region.

For example, the terminal device located in the first region includes the first terminal device, the second terminal device, and the third terminal device. The first terminal device collects Q1 groups of data in the first region in the second time period, and reports the Q1 groups of data to the network device. The second terminal device collects Q2 groups of data in the first region in the second time period, and reports the Q2 groups of data to the network device. The third terminal device collects Q3 groups of data in the first region in the second time period, and reports the Q3 groups of data to the network device. In this case, the third training data includes the Q1 groups of data, the Q2 groups of data, and the Q3 groups of data. Q1, Q2, and Q3 are all positive integers.

**S805-c:** The network device sends configuration information of the third AI model to the terminal device (for example, the first terminal device) located in the first region, and correspondingly, the terminal device located in the first region may receive the configuration information of the third AI model.

For example, for the configuration information of the third AI model, refer to the descriptions of the configuration information of the first AI model in Embodiment 1. The first terminal device is used as an example. After receiving the configuration information of the third AI model, in the first region, the first terminal device may use the third AI model, and no longer use the fourth AI model.

According to the foregoing method, the network device may determine performance of a currently used AI model based on the first feature distribution information and the second feature distribution information, to conveniently and quickly identify whether the performance of the AI model is poor. In addition, when the performance of the AI model is poor, the network device may take a series of solutions. For example, when the performance of the AI model is poor, the network device may update the AI model. Further, in this embodiment of this application, because the network device sends the fifth request information to the first terminal device when determining that the AI model needs to be updated, the first terminal device reports the P1 groups of data to the network device based on a fifth request information. In other words, when the network device does not need to update the AI model, the first terminal device may not need to send the P1 groups of data to the network device, effectively saving a transmission resource.

For the foregoing embodiments, it may be understood that:
(1) The foregoing focuses on differences between different embodiments in Embodiment 1 to Embodiment 4, and content other than the differences may be mutually referenced in Embodiment 1 to Embodiment 4. In addition, in a same embodiment, different implementations, different examples, or different steps may also be mutually referenced.
(2) In the foregoing Embodiment 1 to Embodiment 4, an example in which "a plurality of cells included in the first region belong to a same base station, and the network device is a base station to which the plurality of cells belong" is used for description.

When the plurality of cells included in the first region belong to the same base station, the base station may obtain the first feature distribution information through summarization based on received feature information and/or feature distribution information. When the plurality of cells included in the first region belong to a plurality of base stations, two manners of determining the first feature distribution information are provided herein.

Manner 1: The plurality of base stations may separately send the received feature information and/or feature distribution information to a core network device, so that the core network device may obtain the first feature distribution information through summarization, and send the first feature distribution information to the plurality of base stations.

Manner 2: The plurality of base stations include a first base station, and a base station other than the first base station in the plurality of base stations may separately send the received feature information and/or feature distribution information to the first base station, so that the first base station may obtain the first feature distribution information through summarization, and send the first feature distribution information to another base station.

In addition, in addition to the foregoing differences, for an implementation in which "the plurality of cells included in the first region belong to a plurality of base stations", refer to the implementation in which "a plurality of cells included in the first region belong to a same base station". Details are not described again.
(3) In the foregoing Embodiment 4, an example in which "the network device generates an AI model" is used for description. In another possible implementation, the network device may send training data to a server corresponding to the network device, so that the server corresponding to the network device generates the AI model based on the training data, and sends the AI model to the network device.
(4) In embodiments of this application, "feature distribution information of a plurality of groups of data" may also be replaced with "distribution information of a plurality of groups of data". The feature distribution information of the plurality of groups of data indicates feature distribution of the plurality of groups of data, and the distribution information of the plurality of groups of data indicates distribution of the plurality of groups of data. Similar to the feature distribution of the plurality of groups of data, the distribution of the plurality of groups of data may indicate a quantity or a proportion of data belonging to each of a plurality of categories. A difference between the feature distribution of the plurality of groups of data and the distribution of the plurality of groups of data lies in that, in the feature distribution of the plurality of groups of data, data distribution is determined based on an extracted feature, and in the distribution of the plurality of groups of data, data distribution is determined based on the data itself.
(5) In embodiments of this application, data reported by the terminal device to the network device or the first server may be unpreprocessed data collected by the terminal device, or may be preprocessed data collected by the terminal device. A specific preprocessing manner is not limited.
(6) In embodiments of this application, "generating an AI model based on the training data and the first feature distribution information" may include: performing fine tuning (fine tuning) on an existing AI model based on the training data and the first feature distribution information to obtain a new AI model. For similar processing, refer to the descriptions.

The solutions provided in embodiments of this application are mainly described above from a perspective of interaction between devices. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional unit division may be performed on the network device, the terminal device, and the server based on the foregoing method examples. For example, each functional unit may be obtained through division based on a corresponding function, or two or more functions may be integrated into one unit. The integrated unit may be implemented in a form of hardware, or may be implemented in a form of a software functional unit.

When the integrated unit is used, FIG. 9 is a possible block diagram of an example of an apparatus according to an embodiment of this application. As shown in FIG. 9, an apparatus 900 may include a processing unit 902 and a communication unit 903. The processing unit 902 is configured to control and manage an action of the apparatus 900. The communication unit 903 is configured to support communication between the apparatus 900 and another device. Optionally, the communication unit 903 is also referred to as a transceiver unit, and may include a receiving unit and/or a sending unit, respectively configured to perform a receiving operation and a sending operation. The apparatus 900 may further include a storage unit 901 that is configured to store program code and/or data of the apparatus 900.

The apparatus 900 may be the first terminal device in the foregoing embodiments. The processing unit 902 may support the apparatus 900 in performing the actions of the first terminal device in the foregoing method examples. Alternatively, the processing unit 902 mainly performs an internal action of the first terminal device in the method example, and the communication unit 903 may support the communication between the apparatus 900 and another device.

For example, in an embodiment, the communication unit 903 is configured to: send first information to a network device, where the first information includes at least one of the following: feature information of P1 groups of data and feature distribution information of the P1 groups of data, where the P1 groups of data are data that is collected in a first time period by the first terminal device located in a first region, and P1 is a positive integer; receive first feature distribution information from the network device, where the first feature distribution information indicates feature distribution of data that is collected in the first time period by a terminal device located in the first region, and the terminal device includes the first terminal device; and send the first feature distribution information to a first server, where the first server is associated with the first terminal device.

The apparatus 900 may be the network device in the foregoing embodiments. The processing unit 902 may support the apparatus 900 in performing actions of the network device in the foregoing method examples. Alternatively, the processing unit 902 mainly performs an internal action of the network device in the method example, and the communication unit 903 may support the communication between the apparatus 900 and another device.

For example, in an embodiment, the communication unit 903 is configured to: receive first information from the first terminal device, where the first information includes at least one of the following: feature information of P1 groups of data and feature distribution information of the P1 groups of data, where the P1 groups of data are data that is collected in a first time period by the first terminal device located in a first region, and P1 is a positive integer; send first feature distribution information to the first terminal device, where the first feature distribution information indicates feature distribution of data that is collected in the first time period by a terminal device located in the first region, and the terminal device includes the first terminal device.

The apparatus 900 may be the first server in the foregoing embodiments. The processing unit 902 may support the apparatus 900 in performing the actions of the first server in the foregoing method examples. Alternatively, the processing unit 902 mainly performs an internal action of the first server in the method example, and the communication unit 903 may support the communication between the apparatus 900 and another device.

For example, in an embodiment, the communication unit 903 is configured to receive first feature distribution information from the first terminal device, where the first feature distribution information indicates feature distribution of data that is collected in a first time period by a terminal device located in a first region, and the first server is associated with the first terminal device; the processing unit 902 is configured to generate an AI model based on the first feature distribution information; and the communication unit 903 is further configured to send configuration information of the AI model to the first terminal device.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, the units may be processing elements that are separately disposed, or may be integrated into a chip of the apparatus for implementation. In addition, the units may alternatively be stored in a memory in a form of a program, and are invoked by a processing element of the apparatus to perform functions of the units. In addition, all or some of the units may be integrated, or may be implemented independently. The processing element herein may also be referred to as a processor, and may be an integrated circuit having a signal processing capability. In an implementation process, operations in the foregoing method or the foregoing units may be implemented by using a hardware integrated logic circuit in the processor element or may be implemented in a form in which the processing element invokes software.

In an example, the unit in any one of the foregoing apparatuses may be one or more integrated circuits configured to implement the foregoing method, for example, one or more application-specific integrated circuits (application-specific integrated circuits, ASICs), or one or more microprocessors (digital signal processors, DSPs), or one or more field programmable gate arrays (field programmable gate arrays, FPGAs), or a combination of at least two of these integrated circuit forms. For another example, when the units in the apparatus may be implemented in a form in which the processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

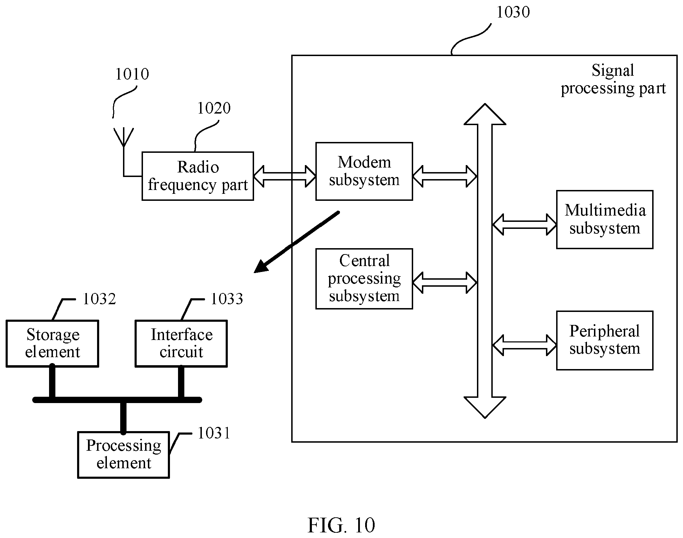

FIG. 10 is a diagram of a structure of a terminal device according to an embodiment of this application. The terminal device may be applied to the communication system shown in FIG. 1, and is configured to implement operations of the terminal device in the foregoing embodiments. As shown in FIG. 10, the terminal device includes: an antenna 1010, a radio frequency part 1020, and a signal processing part 1030. The antenna 1010 is connected to the radio frequency part 1020. In a downlink direction, the radio frequency part 1020 receives, through the antenna 1010, information sent by an access network device, and sends, to the signal processing part 1030 for processing, the information sent by the access network device. In an uplink direction, the signal processing part 1030 processes information of the terminal device, and sends the processed information to the radio frequency part 1020; and the radio frequency part 1020 processes the information of the terminal device, and then sends the processed information to the access network device through the antenna 1010.

The signal processing part 1030 may include a modem subsystem, configured to process data at each communication protocol layer. The signal processing part 1030 may further include a central processing subsystem, configured to process an operating system and an application layer that are of the terminal device. In addition, the signal processing part 1030 may further include another subsystem, for example, a multimedia subsystem, or a peripheral subsystem. The multimedia subsystem is configured to control a camera, a screen display, or the like of the terminal device. The peripheral subsystem is configured to connect to another device. The modem subsystem may be a separately disposed chip.

The modem subsystem may include one or more processing elements 1031, for example, include a main control CPU and another integrated circuit. In addition, the modem subsystem may further include a storage element 1032 and an interface circuit 1033. The storage element 1032 is configured to store data and a program. However, a program used to perform the methods performed by the terminal device in the foregoing methods may not be stored in the storage element 1032, but is stored in a memory outside the modem subsystem, and is loaded and used by the modem subsystem when to be used. The interface circuit 1033 is configured to communicate with another subsystem.

The modem subsystem may be implemented by using a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the method performed by the terminal device in the foregoing method embodiments. The storage element may be a storage element located on a same chip as the processing element, namely, an on-chip storage element.

In another implementation, the program used to perform the method performed by the terminal device in the foregoing methods may be in a storage element located on a different chip from the processing element, that is, an off-chip storage element. In this case, the processing element invokes or loads the program from the off-chip storage element to the on-chip storage element, to invoke and perform the method performed by the terminal device in the foregoing method embodiments.

In still another implementation, units of the terminal device that implement the steps in the foregoing method may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units of the terminal device that implement the steps in the foregoing method may be integrated together, and implemented in a form of SoC. The SoC chip is configured to implement the foregoing method. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in the processor element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 9. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of the integrated circuit forms. The storage element may be implemented by using a memory. A function of the storage element may be the same as a function of the storage unit described in FIG. 9. The storage element may be a memory, or may be a general name of a plurality of memories.

The terminal device shown in FIG. 10 can implement all processes related to the terminal device in the foregoing method embodiments. Operations and/or functions of the modules in the terminal device shown in FIG. 10 are intended to implement the corresponding procedures in the foregoing method embodiments respectively. For details, refer to the descriptions in the foregoing method embodiments. To avoid repetition, detailed descriptions are properly omitted herein.

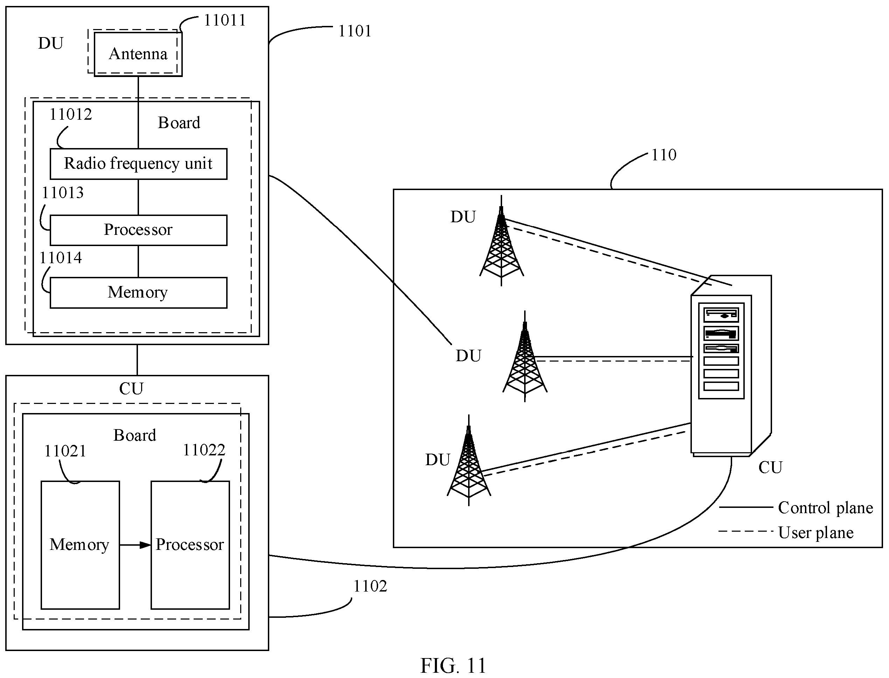

FIG. 11 is a diagram of a structure of a network device according to an embodiment of this application. The network device (or a base station) may be applied to the communication system shown in FIG. 1, to perform functions of the network device in the foregoing method embodiments. As shown in FIG. 11, the network device 110 may include one or more DUs 1101 and one or more CUs 1102. The DU 1101 may include at least one antenna 11011, at least one radio frequency unit 11012, at least one processor 11013, and at least one memory 11014. The DU 1101 part is mainly configured to: receive and send a radio frequency signal, perform conversion between a radio frequency signal and a baseband signal, and perform partial baseband processing. The CU 1102 may include at least one processor 11022 and at least one memory 11021.

The CU 1102 part is mainly configured to: perform baseband processing, control the network device, and the like. The DU 1101 and the CU 1102 may be physically disposed together, or may be physically disposed separately, namely, a distributed base station. The CU 1102 is a control center of the network device, may also be referred to as a processing unit, and is mainly configured to complete a baseband processing function. For example, the CU 1102 may be configured to control the network device to perform an operation procedure related to the network device in the foregoing method embodiments.

In addition, optionally, the network device 110 may include one or more radio frequency units, one or more DUs, and one or more CUs. The DU may include at least one processor 11013 and at least one memory 11014, the radio frequency unit may include at least one antenna 11011 and at least one radio frequency unit 11012, and the CU may include at least one processor 11022 and at least one memory 11021.

In an example, the CU 1102 may include one or more boards. A plurality of boards may jointly support a radio access network (for example, a 5G network) with a single access indication, or may separately support radio access networks (for example, an LTE network, a 5G network, or another network) with different access standards. The memory 11021 and the processor 11022 may serve one or more boards. In other words, a memory and a processor may be separately disposed on each board. Alternatively, a plurality of boards may share a same memory and a same processor. In addition, a necessary circuit may further be disposed on each board. In an example, the DU 1101 may include one or more boards. A plurality of boards may jointly support a radio access network (for example, a 5G network) with a single access indication, or may separately support radio access networks (for example, an LTE network, a 5G network, or another network) with different access standards. The memory 11014 and the processor 11013 may serve one or more boards. In other words, a memory and a processor may be separately disposed on each board. Alternatively, the plurality of boards may share a same memory and a same processor. In addition, a necessary circuit may further be disposed on each board.

The network device shown in FIG. 11 can implement all processes related to the network device in the foregoing method embodiments. Operations and/or functions of the modules in the network device shown in FIG. 11 are intended to implement the corresponding procedures in the foregoing method embodiments respectively. For details, refer to the descriptions in the foregoing method embodiments. To avoid repetition, detailed descriptions are properly omitted herein.

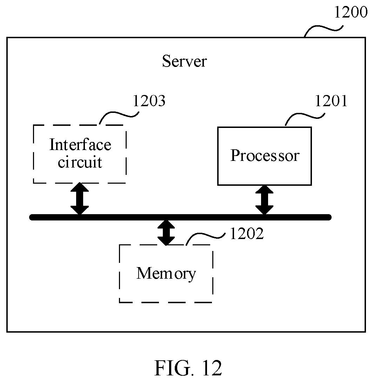

FIG. 12 is a diagram of a structure of a server according to an embodiment of this application. The server is configured to implement the operations of the first server in the foregoing embodiments. As shown in FIG. 12, the server 1200 may include a processor 1201, a memory 1202, and an interface circuit 1203. The processor 1201 may be configured to process a communication protocol and communication data, and control a communication apparatus. The memory 1202 may be configured to store a program and data. The processor 1201 may perform, based on the program, the method performed by the first server in embodiments of this application. The interface circuit 1203 may be used by the server 1200 to communicate with another device. The communication may be wired communication or wireless communication. For example, the interface circuit may be a service-based communication interface.

Alternatively, the memory 1202 may be externally connected to the server 1200. In this case, the server 1200 may include an interface circuit 1203 and a processor 1201. Alternatively, the interface circuit 1203 may be externally connected to the server 1200. In this case, the server 1200 may include a memory 1202 and a processor 1201. When both the interface circuit 1203 and the memory 1202 are externally connected to the server 1200, the server 1200 may include a processor 1201.

The server shown in FIG. 12 can implement all processes related to the first server in the foregoing method embodiments. Operations and/or functions of the modules in the server shown in FIG. 12 are intended to implement the corresponding procedures in the foregoing method embodiments respectively. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the scope of this application. This application is intended to cover these modifications and variations of this application provided that they fall within the scope of protection defined by the following claims.

## Claims

1. A communication system, wherein the communication system comprises a network device (110), a first terminal device (101), and a first server (121), and the first terminal device (101) is associated with the first server (121), wherein
the network device (110) is configured to send first feature distribution information to the first terminal device (101), wherein the first feature distribution information indicates feature distribution of data that is collected in a first time period by a terminal device located in a first region;
the first terminal device (101) is configured to: receive the first feature distribution information, and send the first feature distribution information to the first server (121); and
the first server (121) is configured to: receive the first feature distribution information, determine that a difference between the first feature distribution information and a pre-obtained second feature distribution information meets a first condition, and in response to said determination, generate an artificial intelligence AI model based on the first feature distribution information and training data, and send configuration information of the AI model to the first terminal device (101) or a second terminal device (102) associated with the first server.

2. The system according to claim 1, wherein
the first terminal device (101) is further configured to send first information to the network device (110), wherein the first information comprises at least one of the following: feature information of P1 groups of data or feature distribution information of the P1 groups of data, wherein the P1 groups of data are data that is collected in the first time period by the first terminal device (101) located in the first region, and P1 is a positive integer; and the terminal device comprises the first terminal device (101); and
the network device (110) is further configured to determine the first feature distribution information based on the first information.

3. The system according to claim 2, wherein
the network device (110) is further configured to send first request information, wherein the first request information is used to request the terminal device to collect data in the first time period and report feature information and/or feature distribution information of the collected data; and
before sending the first information to the network device (110), the first terminal device (101) is further configured to receive the first request information.

4. The system according to claim 3, wherein the first request information comprises at least one of the following:
first indication information, wherein the first indication information indicates that information the terminal device is requested to report is the feature information and/or the feature distribution information of the data collected by the terminal device;
second indication information, wherein the second indication information indicates a first manner and/or a second manner, the first manner is used to determine the feature information of the data collected by the terminal device, and the second manner is used to determine the feature distribution information of the data collected by the terminal device;
terminal configuration information, wherein the terminal configuration information indicates a configuration condition that should be met when the first terminal device (10) collects the P1 groups of data;
trigger information, wherein the trigger information comprises a trigger manner and/or a trigger configuration, the trigger manner comprises at least one of the following: event triggering and periodic triggering, and the trigger configuration comprises at least one of the following: a trigger event and a trigger periodicity;
quantity information, wherein the quantity information indicates a value of P1;
region information, wherein the region information indicates the first region; and
time period information, wherein the time period information indicates the first time period.

5. The system according to any one of claims 2 to 4, wherein
the first terminal device (101) is further configured to send second request information to the network device (110), wherein the second request information is used to request to send the first feature distribution information to the first terminal device (101); and
before sending the first feature distribution information to the first terminal device (101), the network device is further configured to receive the second request information.

6. The system according to any one of claims 2 to 5, wherein
the first server (121) is further configured to send third request information to the first terminal device (101), wherein the third request information is used to request to send the first feature distribution information to the first server (121); and
before sending the first feature distribution information to the first server (121), the first terminal device (101) is further configured to receive the third request information.

7. The system according to any one of claims 2 to 6, wherein the first server (121) is further configured to receive the P1 groups of data from the first terminal device (101), wherein the training data comprises the P1 groups of data, the P1 groups of data are the data that is collected in the first time period by the first terminal device (101) located in the first region, and P1 is a positive integer.

8. A communication method, wherein the method is applied to a first server (121), and the method comprises:
receiving (S503) first feature distribution information from a first terminal device (101), wherein the first feature distribution information indicates feature distribution of data that is collected in a first time period by a terminal device located in a first region, and the first server (121) is associated with the first terminal device (101);
determining that a difference between the first feature distribution information and a pre-obtained second feature distribution information meets a first condition, and in response to said determining, generating (S504) an AI model based on the first feature distribution information and training data; and
sending (S505) configuration information of the AI model to the first terminal device (101) or a second terminal device (102) associated with the first server (121).

9. The method according to claim 8, wherein the method further comprises:
receiving P1 groups of data from the first terminal device (101), wherein the P1 groups of data are data that is collected in the first time period by the first terminal device (101) located in the first region, and P1 is a positive integer; and
training data comprises the P1 groups of data.

10. The method according to claim 8 or 9, wherein the method further comprises:
receiving P2 groups of data from the second terminal device (102), wherein the P2 groups of data are data that is collected in the first time period by the second terminal device (102) located in the first region, and P2 is a positive integer; and
the training data comprises the P2 groups of data.

11. The method according to claim 10, wherein the training data comprises data pre-obtained by the first server (121).

12. The method according to any one of claims 8 to 11, wherein before the receiving (S503) first feature distribution information from a first terminal device (101), the method further comprises:
sending (S701) third request information to the first terminal device (101), wherein the third request information is used to request to send the first feature distribution information to the first server (121).

13. A communication apparatus, wherein the communication apparatus comprises a processor, and the processor is configured to perform the method according to any one of claims 8 to 12.

14. A computer-readable storage medium (1202), wherein the computer-readable storage medium (1202) stores a computer program or instructions, and when the computer program or the instructions are run on a computer, the method according to any one of claims 8 to 12 is performed.

15. A computer program product, wherein the computer program product comprises a computer program or instructions, and when the computer program or the instructions are run on a server (121), the method according to any one of claims 8 to 12 is performed.

## Patentansprüche

1. Kommunikationssystem, wobei das Kommunikationssystem eine Netzwerkeinrichtung (110), ein erstes Endgerät (101) und einen ersten Server (121) umfasst und das erste Endgerät (101) dem ersten Server (121) zugeordnet ist, wobei
die Netzwerkeinrichtung (110) dazu konfiguriert ist, erste Merkmalsverteilungsinformationen an das erste Endgerät (101) zu senden, wobei die ersten Merkmalsverteilungsinformationen eine Merkmalsverteilung von Daten angeben, die in einem ersten Zeitraum durch ein Endgerät, das sich in einer ersten Region befindet, erfasst wird;
das erste Endgerät (101) zu Folgendem konfiguriert ist:
Empfangen der ersten Merkmalsverteilungsinformationen und Senden der ersten Merkmalsverteilungsinformationen an den ersten Server (121); und
der erste Server (121) zu Folgendem konfiguriert ist: Empfangen der ersten Merkmalsverteilungsinformationen, Bestimmen, dass eine Differenz zwischen den ersten Merkmalsverteilungsinformationen und zuvor erlangten zweiten Merkmalsverteilungsinformationen eine erste Bedingung erfüllt, und, als Reaktion die Bestimmung, Generieren eines Modells künstlicher Intelligenz, KI-Modells, basierend auf den ersten Merkmalsverteilungsinformationen und Trainingsdaten und Senden von Konfigurationsinformationen des KI-Modells an das erste Endgerät (101) oder ein zweites Endgerät (102), das dem ersten Server zugeordnet ist.

2. System nach Anspruch 1, wobei
das erste Endgerät (101) ferner dazu konfiguriert ist, erste Informationen an die Netzwerkeinrichtung (110) zu senden, wobei die ersten Informationen mindestens eines des Folgenden umfassen: Merkmalsinformationen von P1 Datengruppen oder Merkmalsverteilungsinformationen der P1 Datengruppen, wobei die P1 Datengruppen Daten sind, die durch das erste Endgerät (101), das sich in der ersten Region befindet, in dem ersten Zeitraum erfasst werden, und P1 eine positive ganze Zahl ist; und das Endgerät das erste Endgerät (101) umfasst; und
die Netzwerkeinrichtung (110) ferner dazu konfiguriert ist, die ersten Merkmalsverteilungsinformationen basierend auf den ersten Informationen zu bestimmen.

3. System nach Anspruch 2, wobei
die Netzwerkeinrichtung (110) ferner dazu konfiguriert ist, erste Anforderungsinformationen zu senden, wobei die ersten Anforderungsinformationen verwendet werden, um anzufordern, dass das Endgerät Daten in dem ersten Zeitraum erfasst und Merkmalsinformationen und/oder Merkmalsverteilungsinformationen der erfassten Daten meldet; und
das erste Endgerät (101) vor dem Senden der ersten Informationen an die Netzwerkeinrichtung (110) ferner dazu konfiguriert ist, die ersten Anforderungsinformationen zu empfangen.

4. Verfahren nach Anspruch 3, wobei die ersten Anforderungsinformationen mindestens eines des Folgenden umfassen:
erste Angabeinformationen, wobei die ersten Angabeinformationen angeben, dass Informationen, für die angefordert wird, dass das Endgerät sie meldet, die Merkmalsinformationen und/oder die Merkmalsverteilungsinformationen der durch das Endgerät erfassten Daten sind;
zweite Angabeinformationen, wobei die zweiten Angabeinformationen eine erste Art und/oder eine zweite Art angeben, wobei die erste Art verwendet wird, um die Merkmalsinformationen der durch das Endgerät erfassten Daten zu bestimmen, und die zweite Art verwendet wird, um die Merkmalsverteilungsinformationen der durch das Endgerät erfassten Daten zu bestimmen;
Endgerätkonfigurationsinformationen, wobei die Endgerätkonfigurationsinformationen eine Konfigurationsbedingung angeben, die erfüllt sein sollte, wenn das erste Endgerät (10) die P1 Datengruppen erfasst;
Auslöserinformationen, wobei die Auslöserinformationen eine Auslöserart und/oder eine Auslöserkonfiguration umfassen und die Auslöserart mindestens eines des Folgenden umfasst: ereignisgesteuertes Auslösen und periodisches Auslösen, und die Auslöserkonfiguration mindestens eines des Folgenden umfasst:
ein Auslöserereignis und eine Auslöserperiodizität;
Mengeninformationen, wobei die Mengeninformationen einen Wert von P1 angeben;
Regionsinformationen, wobei die Regionsinformationen die erste Region angeben; und
Zeitrauminformationen, wobei die Zeitrauminformationen den ersten Zeitraum angeben.

5. System nach einem der Ansprüche 2 bis 4, wobei
das erste Endgerät (101) ferner dazu konfiguriert ist, zweite Anforderungsinformationen an die Netzwerkeinrichtung (110) zu senden, wobei die zweiten Anforderungsinformationen verwendet werden, um anzufordern, dass die ersten Merkmalsverteilungsinformationen an das erste Endgerät (101) gesendet werden; und
die Netzwerkeinrichtung vor dem Senden der ersten Merkmalsverteilungsinformationen an das erste Endgerät (101) ferner dazu konfiguriert ist, die zweiten Anforderungsinformationen zu empfangen.

6. System nach einem der Ansprüche 2 bis 5, wobei
der erste Server (121) ferner dazu konfiguriert ist, dritte Anforderungsinformationen an das erste Endgerät (101) zu senden, wobei die dritten Anforderungsinformationen verwendet werden, um anzufordern, dass die ersten Merkmalsverteilungsinformationen an den ersten Server (121) gesendet werden; und
das erste Endgerät (101) vor dem Senden der ersten Merkmalsverteilungsinformationen an den ersten Server (121) ferner dazu konfiguriert ist, die dritten Anforderungsinformationen zu empfangen.

7. System nach einem der Ansprüche 2 bis 6, wobei der erste Server (121) ferner dazu konfiguriert ist, die P1 Datengruppen von dem ersten Endgerät (101) zu empfangen, wobei die Trainingsdaten die P1 Datengruppen umfassen, die P1 Datengruppen die Daten sind, die in dem ersten Zeitraum durch das erste Endgerät (101), das sich in der ersten Region befindet, erfasst werden, und P1 eine positive ganze Zahl ist.

8. Kommunikationsverfahren, wobei das Verfahren auf einen ersten Server (121) angewendet wird und das Verfahren Folgendes umfasst:
Empfangen (S503) von ersten Merkmalsverteilungsinformationen von einem ersten Endgerät (101), wobei die ersten Merkmalsverteilungsinformationen eine Merkmalsverteilung von Daten angeben, die in einem ersten Zeitraum durch ein Endgerät, das sich in einer ersten Region befindet, erfasst wird, und der erste Server (121) dem ersten Endgerät (101) zugeordnet ist;
Bestimmen, dass eine Differenz zwischen den ersten Merkmalsverteilungsinformationen und zuvor erlangten zweiten Merkmalsverteilungsinformationen eine erste Bedingung erfüllt, und, als Reaktion die Bestimmung, Generieren (S504) eines KI-Modells basierend auf den ersten Merkmalsverteilungsinformationen und Trainingsdaten; und
Senden (S505) von Konfigurationsinformationen des KI-Modells an das erste Endgerät (101) oder ein zweites Endgerät (102), das dem ersten Server (121) zugeordnet ist.

9. Verfahren nach Anspruch 8, wobei das Verfahren ferner Folgendes umfasst:
Empfangen von P1 Datengruppen von dem ersten Endgerät (101), wobei die P1 Datengruppen Daten sind, die in dem ersten Zeitraum durch das erste Endgerät (101), das sich in der ersten Region befindet, erfasst werden, und P1 eine positive ganze Zahl ist; und
die Trainingsdaten die P1 Datengruppen umfassen.

10. Verfahren nach Anspruch 8 oder 9, wobei das Verfahren ferner Folgendes umfasst:
Empfangen von P2 Datengruppen von dem zweiten Endgerät (102), wobei die P2 Datengruppen Daten sind, die in dem ersten Zeitraum durch das zweite Endgerät (102), das sich in der ersten Region befindet, erfasst werden, und P2 eine positive ganze Zahl ist; und
die Trainingsdaten die P2 Datengruppen umfassen.

11. Verfahren nach Anspruch 10, wobei die Trainingsdaten Daten umfassen, die zuvor durch den ersten Server (121) erlangt wurden.

12. Verfahren nach einem der Ansprüche 8 bis 11, wobei das Verfahren vor dem Empfangen (S503) von ersten Merkmalsverteilungsinformationen von einem ersten Endgerät (101) ferner Folgendes umfasst:
Senden (S701) von dritten Anforderungsinformationen an das erste Endgerät (101), wobei die dritten Anforderungsinformationen verwendet werden, um anzufordern, dass die ersten Merkmalsverteilungsinformationen an den ersten Server (121) gesendet werden.

13. Kommunikationsvorrichtung, wobei die Kommunikationsvorrichtung einen Prozessor umfasst und der Prozessor dazu konfiguriert ist, das Verfahren nach einem der Ansprüche 8 bis 12 durchzuführen.

14. Computerlesbares Speichermedium (1202), wobei das computerlesbare Speichermedium (1202) ein Computerprogramm oder Anweisungen speichert und, wenn das Computerprogramm oder die Anweisungen auf einem Computer ausgeführt wird/werden, das Verfahren nach einem der Ansprüche 8 bis 12 durchgeführt wird.

15. Computerprogrammprodukt, wobei das Computerprogrammprodukt ein Computerprogramm oder Anweisungen umfasst und, wenn das Computerprogramm oder die Anweisungen auf einem Server (121) ausgeführt wird/werden, das Verfahren nach einem der Ansprüche 8 bis 12 durchgeführt wird.

## Revendications

1. Système de communication, dans lequel le système de communication comprend un dispositif réseau (110), un premier dispositif terminal (101) et un premier serveur (121),et le premier dispositif terminal (101) étant associé au premier serveur (121), dans lequel
le dispositif réseau (110) est configuré pour envoyer les premières informations de distribution de caractéristiques au premier dispositif terminal (101), dans lequel les premières informations de distribution de caractéristiques indiquent la distribution de caractéristiques des données collectées au cours d'une première période de temps par un dispositif terminal situé dans une première zone ;
le premier dispositif terminal (101) est configuré pour :
recevoir les premières informations de distribution de caractéristiques et envoyer les premières informations de distribution de caractéristiques au premier serveur (121) ; et
le premier serveur (121) est configuré pour : recevoir les premières informations de distribution de caractéristiques, déterminer qu'une différence entre les premières informations de distribution de caractéristiques et les deuxièmes informations de distribution de caractéristiques pré-obtenues remplit une première condition, et en réponse à ladite détermination, générer un modèle d'intelligence artificielle (IA) sur la base des premières informations de distribution de caractéristiques et des données d'entraînement, et envoyer les informations de configuration du modèle d'IA au premier dispositif terminal (101) ou à un second dispositif terminal (102) associé au premier serveur.

2. Système selon la revendication 1, dans lequel
le premier dispositif terminal (101) est en outre configuré pour envoyer les premières informations au dispositif réseau (110), dans lequel les premières informations comprennent au moins l'une : des informations de caractéristiques des groupes de données P1 ou des informations de distribution de caractéristiques des groupes de données P1, dans lequel les groupes de données P1 sont des données collectées au cours de la première période de temps par le premier dispositif terminal (101) situé dans la première zone, et P1 est un entier positif ; et le dispositif terminal comprend le premier dispositif terminal (101) ; et
le dispositif réseau (110) est en outre configuré pour déterminer les premières informations de distribution de caractéristiques sur la base des premières informations.

3. Système selon la revendication 2, dans lequel
le dispositif réseau (110) est en outre configuré pour envoyer les premières informations de demande, dans lequel les premières informations de demande sont utilisées pour demander au dispositif terminal de collecter des données au cours de la première période de temps et de signaler les informations de caractéristiques et/ou de distribution de caractéristiques des données collectées ; et
avant d'envoyer les premières informations au dispositif réseau (110), le premier dispositif terminal (101) est en outre configuré pour recevoir les premières informations de demande.

4. Système selon la revendication 3, dans lequel les premières informations de demande comprennent au moins l'une :
des premières informations d'indication, dans lequel les premières informations d'indication indiquent que les informations que le dispositif terminal est invité à signaler sont les informations de caractéristiques et/ou les informations de distribution de caractéristiques des données collectées par le dispositif terminal ;
des secondes informations d'indication, dans lequel les secondes informations d'indication indiquent un premier mode et/ou un second mode, le premier mode est utilisé pour déterminer les informations de caractéristiques des données collectées par le dispositif terminal, et le second mode est utilisé pour déterminer les informations de distribution de caractéristiques des données collectées par le dispositif terminal ;
des informations de configuration du terminal, dans lequel les informations de configuration du terminal indiquent une condition de configuration qui doit être remplie lorsque le premier dispositif terminal (10) collecte les groupes de données P1 ;
des informations de déclenchement, dans lequel les informations de déclenchement comprennent un mode de déclenchement et/ou une configuration de déclenchement, le mode de déclenchement comprend au moins l'un d'un déclenchement par événement et d'un déclenchement périodique, et la configuration de déclenchement comprend au moins l'un d'un événement de déclenchement et d'une périodicité de déclenchement ;
des informations de quantité, dans lequel les informations de quantité indiquent une valeur de P1 ;
des informations de zone, dans lequel les informations de zone indiquent la première zone ; et
des informations de période de temps, dans lequel les informations de période de temps indiquent la première période de temps.

5. Système selon l'une quelconque des revendications 2 à 4, dans lequel
le premier dispositif terminal (101) est en outre configuré pour envoyer les deuxièmes informations de demande au dispositif réseau (110), dans lequel les deuxièmes informations de demande sont utilisées pour demander d'envoyer les premières informations de distribution de caractéristiques au premier dispositif terminal (101) ; et
avant d'envoyer les premières informations de distribution de caractéristiques au premier dispositif terminal (101), le dispositif réseau est en outre configuré pour recevoir les deuxièmes informations de demande.

6. Système selon l'une quelconque des revendications 2 à 5, dans lequel
le premier serveur (121) est en outre configuré pour envoyer les troisièmes informations de demande au premier dispositif terminal (101), dans lequel les troisièmes informations de demande sont utilisées pour demander d'envoyer les premières informations de distribution de caractéristiques au premier serveur (121) ; et
avant d'envoyer les premières informations de distribution de caractéristiques au premier serveur (121), le premier dispositif terminal (101) est en outre configuré pour recevoir les troisièmes informations de demande.

7. Système selon l'une quelconque des revendications 2 à 6, dans lequel le premier serveur (121) est en outre configuré pour recevoir les groupes de données P1 à partir du premier dispositif terminal (101), dans lequel les données d'entraînement comprennent les groupes de données P1, les groupes de données P1 sont les données collectées au cours de la première période de temps par le premier dispositif terminal (101) situé dans la première zone, et P1 est un entier positif.

8. Procédé de communication, dans lequel le procédé est appliqué à un premier serveur (121), et le procédé comprend :
la réception (S503) des premières informations de distribution de caractéristiques à partir d'un premier dispositif terminal (101), dans lequel les premières informations de distribution de caractéristiques indiquent la distribution de caractéristiques des données collectées au cours d'une première période de temps par un dispositif terminal situé dans une première zone et le premier serveur (121) est associé au premier dispositif terminal (101) ;
la détermination qu'une différence entre les premières informations de distribution de caractéristiques et les secondes informations de distribution de caractéristiques préalablement obtenues remplit une première condition, et en réponse à ladite détermination, la génération (S504) d'un modèle d'IA sur la base des premières informations de distribution de caractéristiques et des données d'entraînement ; et
l'envoi (S505) des informations de configuration du modèle d'IA au premier dispositif terminal (101) ou à un second dispositif terminal (102) associé au premier serveur (121).

9. Procédé selon la revendication 8, dans lequel le procédé comprend en outre :
la réception des groupes de données P1 à partir du premier dispositif terminal (101), dans lequel les groupes de données P1 sont les données collectées au cours de la première période de temps par le premier dispositif terminal (101) situé dans la première zone, et P1 est un entier positif, et
les données d'entraînement comprennent les groupes de données P1.

10. Procédé selon la revendication 8 ou 9, dans lequel le procédé comprend t en outre :
la réception des groupes de données P2 à partir du second dispositif terminal (102), dans lequel les groupes de données P2 sont les données collectées au cours de la première période de temps par le second dispositif terminal (102) situé dans la première zone, et P2 est un entier positif ; et
les données d'entraînement comprennent les groupes de données P2.

11. Procédé selon la revendication 10, dans lequel les données d'entraînement comprennent des données pré-obtenues par le premier serveur (121).

12. Procédé selon l'une quelconque des revendications 8 à 11, dans lequel avant la réception (S503) des premières informations de distribution de caractéristiques à partir d'un premier dispositif terminal (101), le procédé comprend en outre :
l'envoi (S701) des troisièmes informations de demande au premier dispositif terminal (101), dans lequel les troisièmes informations de demande sont utilisées pour demander d'envoyer les premières informations de distribution de caractéristiques au premier serveur (121).

13. Appareil de communication, dans lequel l'appareil de communication comprend un processeur, et le processeur est configuré pour réaliser le procédé selon l'une quelconque des revendications 8 à 12.

14. Support de stockage lisible par ordinateur (1202), dans lequel le support de stockage lisible par ordinateur (1202) stocke un programme informatique ou des instructions, et lorsque le programme informatique ou les instructions sont exécutés sur un ordinateur, le procédé selon l'une quelconque des revendications 8 à 12 est réalisé.

15. Produit de programme informatique, dans lequel le produit de programme informatique comprend un programme informatique ou des instructions, et lorsque le programme informatique ou les instructions sont exécutés sur un serveur (121), le procédé selon l'une quelconque des revendications 8 à 12 est réalisé.
